(19) Europäisches Patentamt
European Patent Office
Office européen des brevets

(11) **EP 3 736 770 A1**

(12) **EUROPEAN PATENT APPLICATION**
published in accordance with Art. 153(4) EPC

(43) Date of publication:
**11.11.2020 Bulletin 2020/46**

(51) Int Cl.:
***G06T 7/55*** *(2017.01)*

(21) Application number: **18898875.2**

(22) Date of filing: **21.12.2018**

(86) International application number:
**PCT/JP2018/047161**

(87) International publication number:
**WO 2019/135365 (11.07.2019 Gazette 2019/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.01.2018 JP 2018000387**

(71) Applicant: **Sony Corporation**
**108-0075 Tokyo (JP)**

(72) Inventor: **HAYASAKA Kengo**
**Tokyo 108-0075 (JP)**

(74) Representative: **D Young & Co LLP**
**120 Holborn**
**London EC1N 2DY (GB)**

(54) **IMAGE PROCESSING DEVICE, IMAGE PROCESSING METHOD, AND PROGRAM**

(57) The present technology relates to an image processing apparatus, an image processing method, and a program that make it possible to appropriately obtain parallax information.

An image processing section performs, according to an imaging target distance, detected upon imaging of an imaging target, to the imaging target reflected in each of viewpoint images captured from a plurality of viewpoints, an image process using the viewpoint images to obtain parallax information in regard to the viewpoint images. The present technology can be applied to such a case that, for example, an image process using multi-viewpoint images is performed to obtain parallax information in regard to the viewpoint images.

FIG.1

EP 3 736 770 A1

**Description**

[Technical Field]

The present technology relates to an image processing apparatus, an image processing method, and a program, and particularly to an image processing apparatus, an image processing method, and a program that make it possible to appropriately obtain parallax information regarding a parallax, for example, from multi-viewpoint images.

[Background Art]

For example, a technology has been proposed which calculates an imaging target distance to an imaging target, calculates a degree of reliability representative of a likelihood of the imaging target distance, and calculates a range of the imaging target distance on the basis of the imaging target distance and the degree of reliability by a phase difference method (for example, refer to PTL 1).

[Citation List]

[Patent Literature]

[PTL 1]
JP 2016-173322A

[Summary]

[Technical Problem]

Incidentally, in the case where an image process using multi-viewpoint images is performed to try to obtain, for a viewpoint image, parallax information relating to a parallax of an imaging target reflected on the viewpoint images, the image process cannot sometimes be performed appropriately, resulting in failure to appropriately obtain parallax information.

For example, in the case where an imaging target having a great parallax is reflected on viewpoint images, that is, in the case where an imaging target at a small distance is reflected, the parallax information cannot sometimes be obtained appropriately.

The present technology has been made in view of such a situation as just described and makes it possible to appropriately obtain parallax information from multi-viewpoint images.

[Solution to Problem]

A first image processing apparatus or program of the present technology is an image processing apparatus including an image processing section configured to perform, according to an imaging target distance, detected upon imaging of an imaging target, to the imaging target reflected in each of viewpoint images captured from a plurality of viewpoints, an image process using the viewpoint images to obtain parallax information in regard to the viewpoint images or a program for causing a computer to function as such an image processing apparatus as described above.

A first image processing method of the present technology is an image processing method including performing, according to an imaging target distance, detected upon imaging of an imaging target, to the imaging target reflected in each of viewpoint images captured from a plurality of viewpoints, an image process using the viewpoint images to obtain parallax information in regard to the viewpoint images.

In the first image processing apparatus, image processing method, and program of the present technology, according to an imaging target distance, detected upon imaging of an imaging target, to the imaging target reflected in each of viewpoint images captured from a plurality of viewpoints, an image process using the viewpoint images is performed to obtain parallax information in regard to the viewpoint images.

A second image processing apparatus or program of the present technology is an image processing apparatus including a change requesting section configured to request, according to an imaging target distance, detected upon imaging of an imaging target, to the imaging target reflected in each of viewpoint images captured from a plurality of viewpoints, change of an imaging state of the imaging target or a program for causing a computer to function as such an image processing apparatus.

A second image processing method of the present technology is an image processing method including requesting, according to an imaging target distance, detected upon imaging of an imaging target, to the imaging target reflected in each of viewpoint images captured from a plurality of viewpoints, change of an imaging state of the imaging target.

In the second image processing apparatus, image processing method, and program of the present technology, according to an imaging target distance, detected upon imaging of an imaging target, to the imaging target reflected in each of viewpoint images captured from a plurality of viewpoints, change of an imaging state of the imaging target is requested.

It is to be noted that the first image processing apparatus or the second image processing apparatus may be an independent apparatus or may be an internal block configuring one apparatus.

Further, the program can be provided by transmitting the same through a transmission medium or by recording the same in a recording medium.

[Advantageous Effect of Invention]

According to the present technology, parallax information can be obtained appropriately.

It is to be noted that the effect described here is not necessarily restrictive and some effect described in the present disclosure may be applicable.

[Brief Description of Drawings]

[FIG. 1]

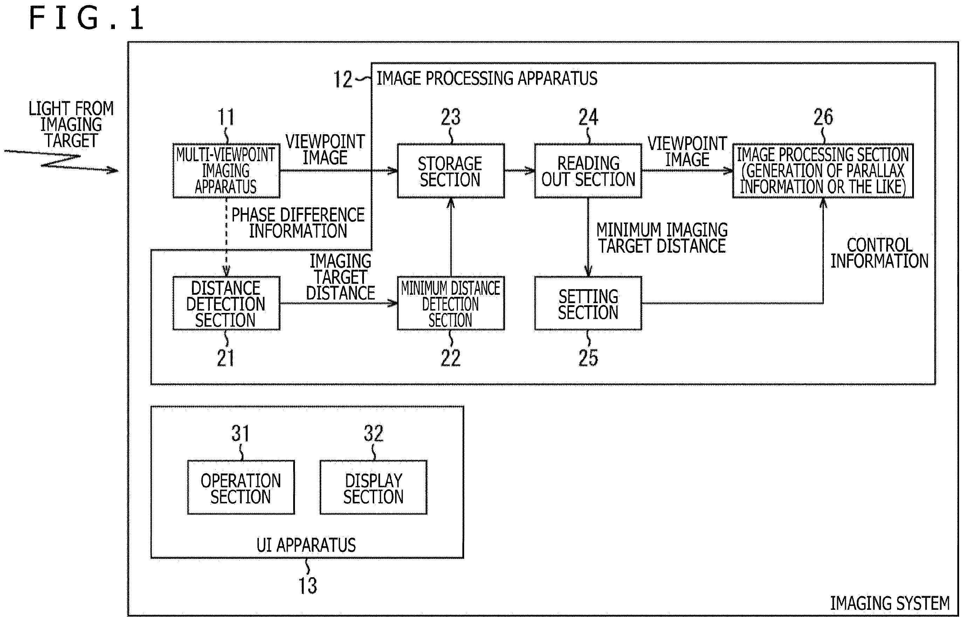

FIG. 1 is a block diagram depicting an example of a configuration of a first embodiment of an imaging system to which the present technology is applied.
[FIG. 2]

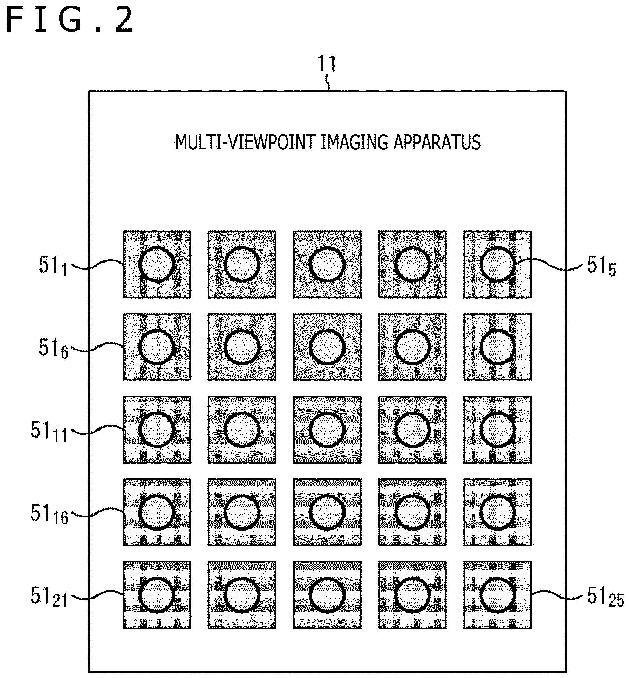

FIG. 2 is a plan view depicting a first example of a configuration of a multi-viewpoint imaging apparatus 11.
[FIG. 3]

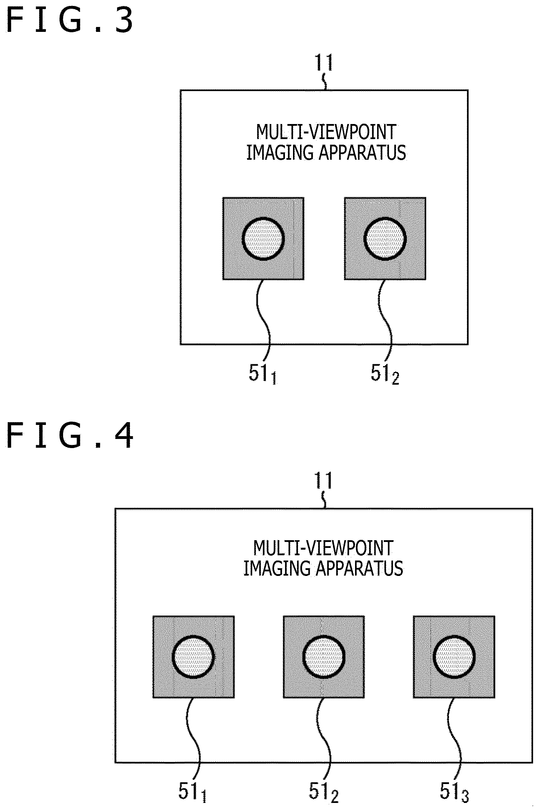

FIG. 3 is a plan view depicting a second example of a configuration of the multi-viewpoint imaging apparatus 11.
[FIG. 4]
FIG. 4 is a plan view depicting a third example of a configuration of the multi-viewpoint imaging apparatus 11.
[FIG. 5]

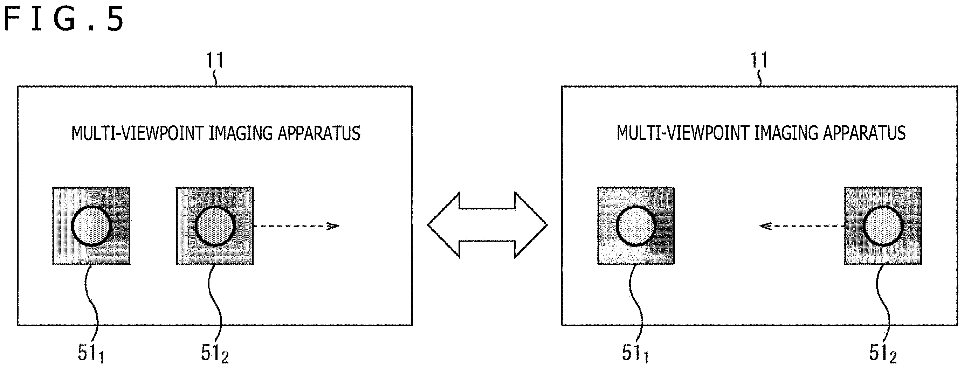

FIG. 5 is a plan view depicting a fourth example of a configuration of the multi-viewpoint imaging apparatus 11.
[FIG. 6]

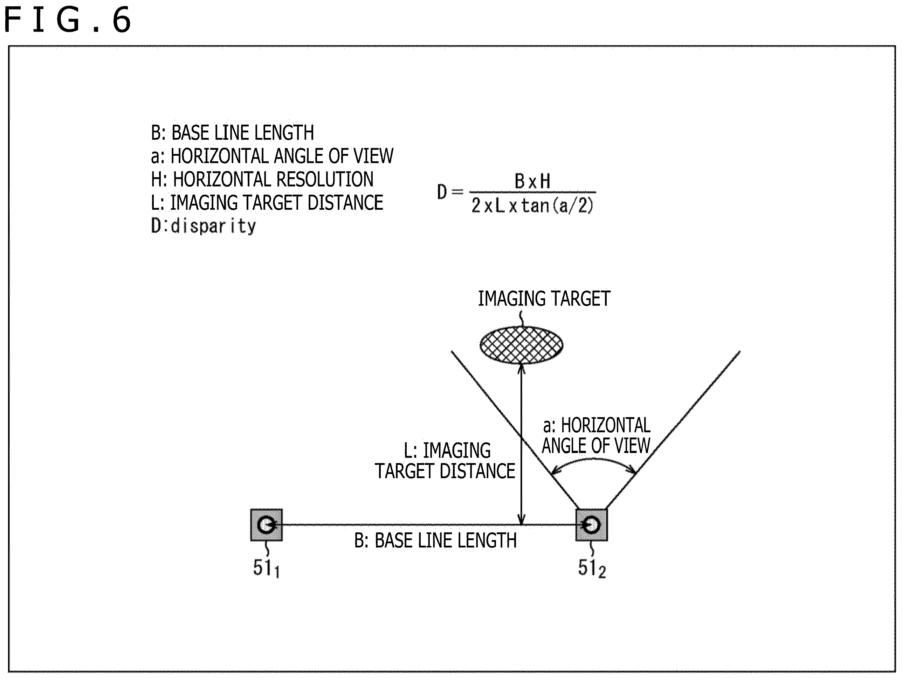

FIG. 6 is a view illustrating a relationship between a disparity and an imaging target distance.
[FIG. 7]

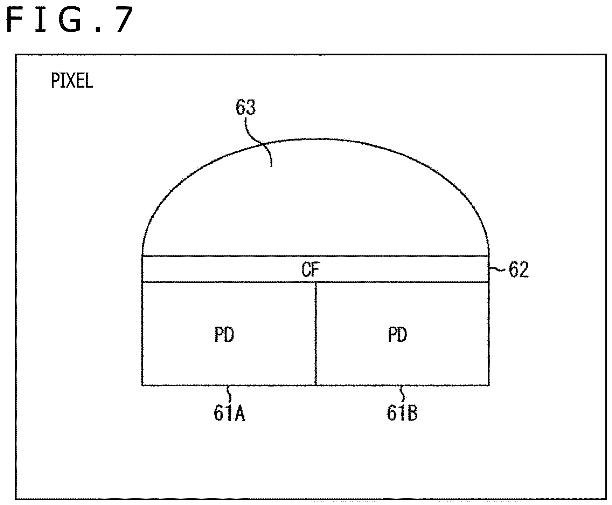

FIG. 7 is a sectional view depicting an example of a configuration of a pixel a camera 51i has.
[FIG. 8]

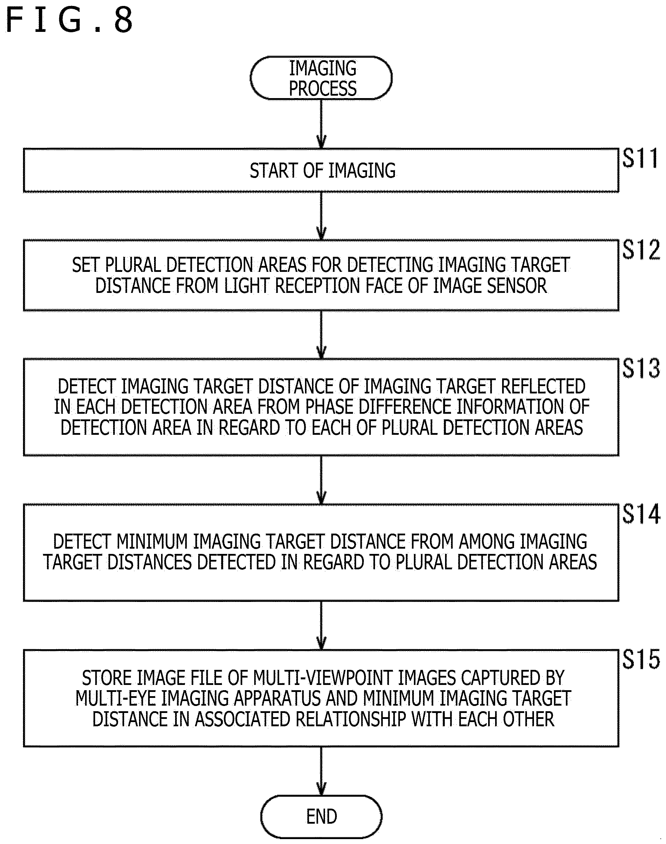

FIG. 8 is a flow chart illustrating an example of an imaging process performed by the imaging system.
[FIG. 9]

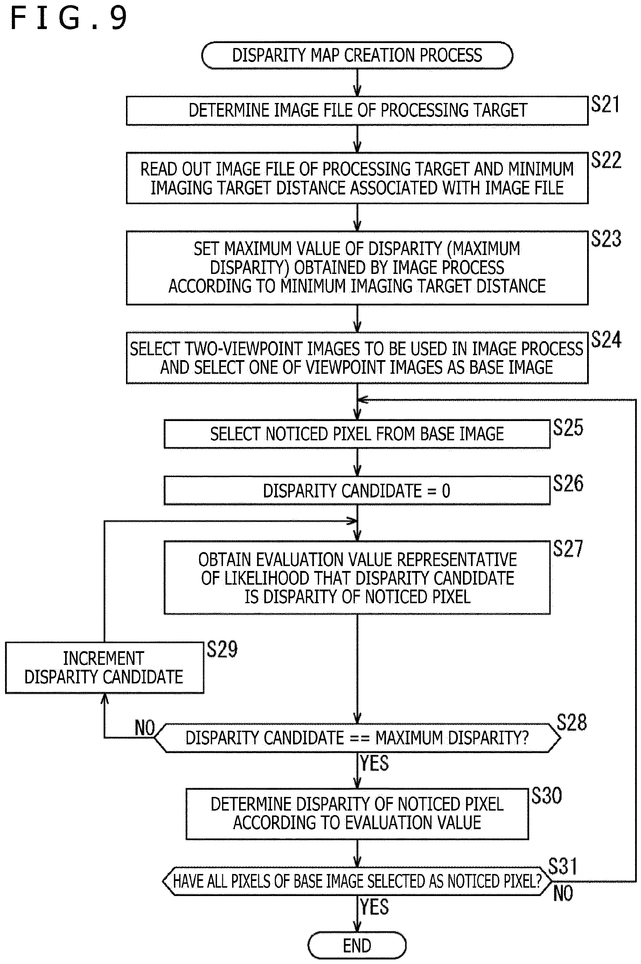

FIG. 9 is a flow chart illustrating an example of a disparity map creation process as an image process performed by the imaging system.
[FIG. 10]

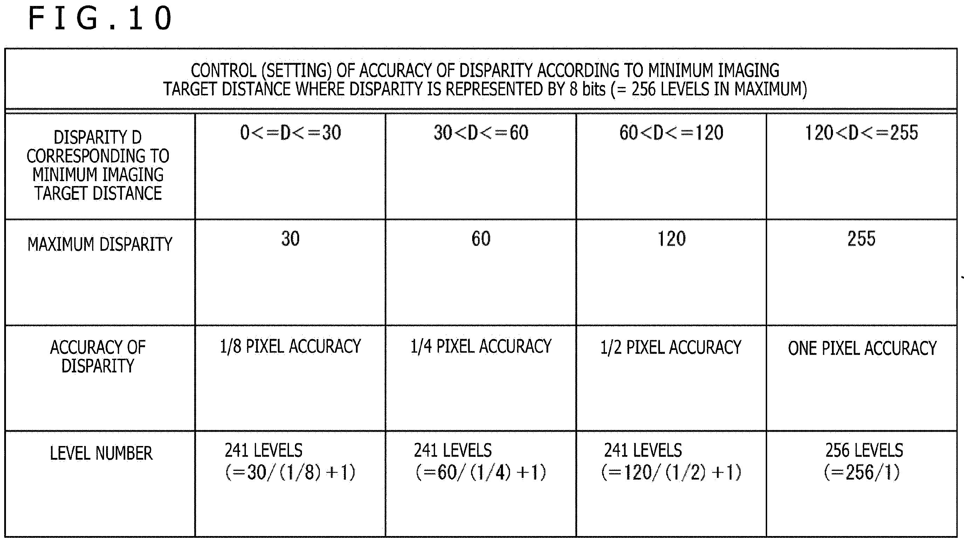

FIG. 10 is a view depicting an example of setting of accuracy of the disparity according to a minimum imaging target distance.
[FIG. 11]

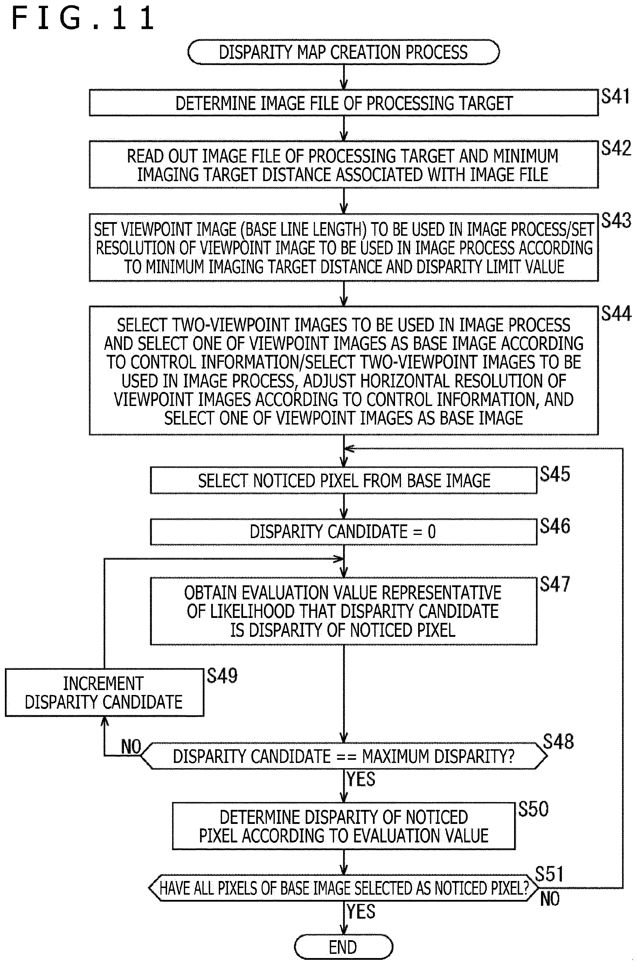

FIG. 11 is a flow chart illustrating another example of the disparity map creation process as the image process performed by the imaging system.
[FIG. 12]

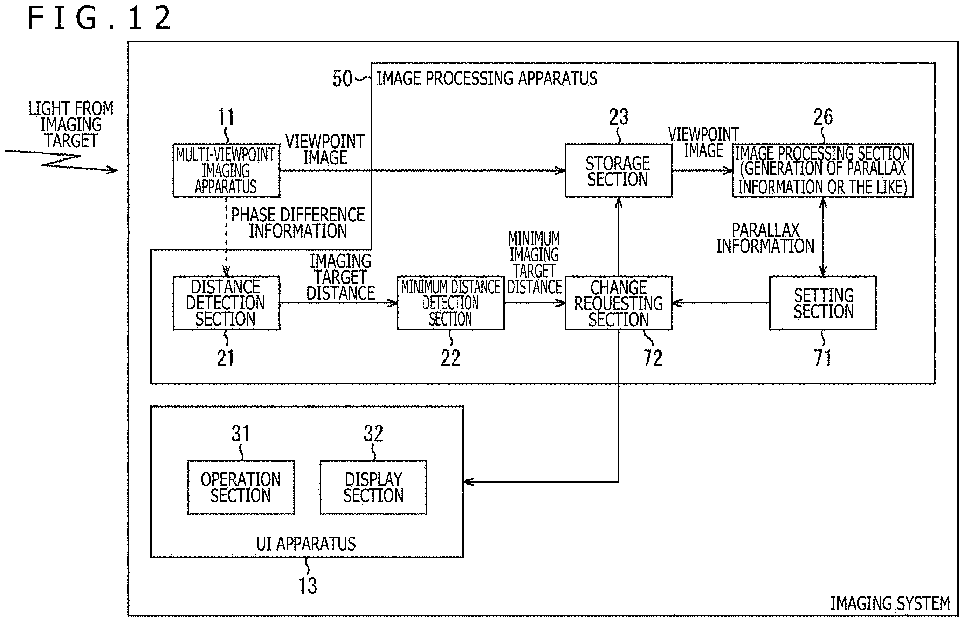

FIG. 12 is a block diagram depicting an example of a configuration of a second embodiment of the imaging system to which the present technology is applied.
[FIG. 13]

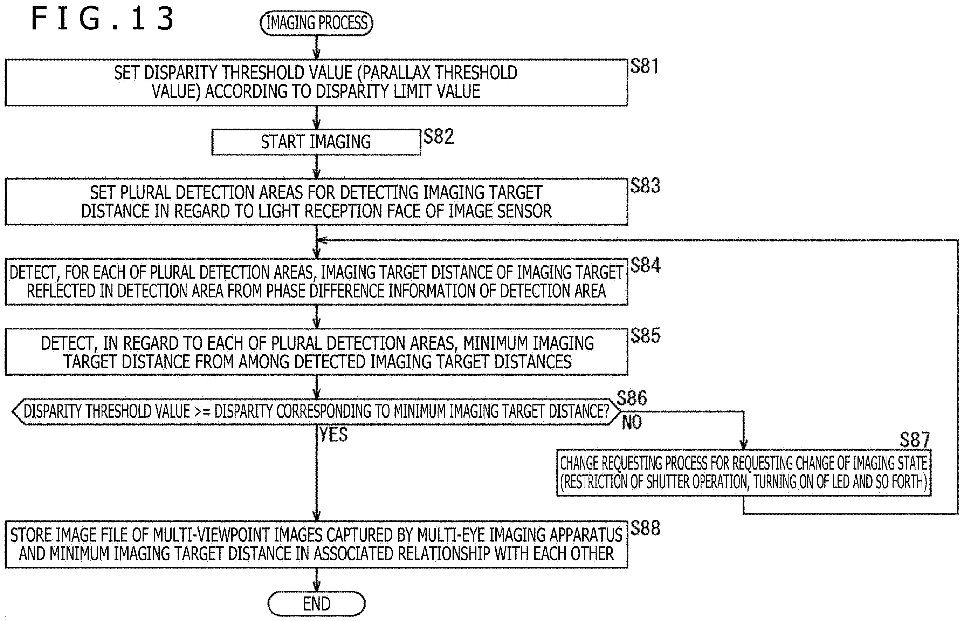

FIG. 13 is a flow chart illustrating an example of an imaging process performed by the imaging system.
[FIG. 14]

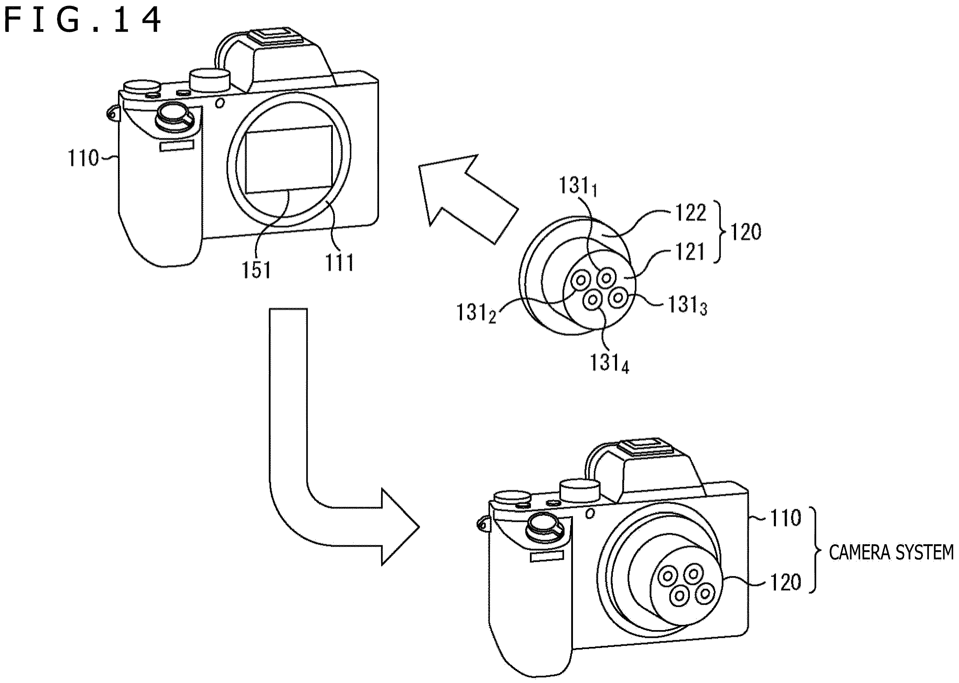

FIG. 14 is a perspective view depicting an example of a configuration of a camera system that utilizes the imaging system.
[FIG. 15]

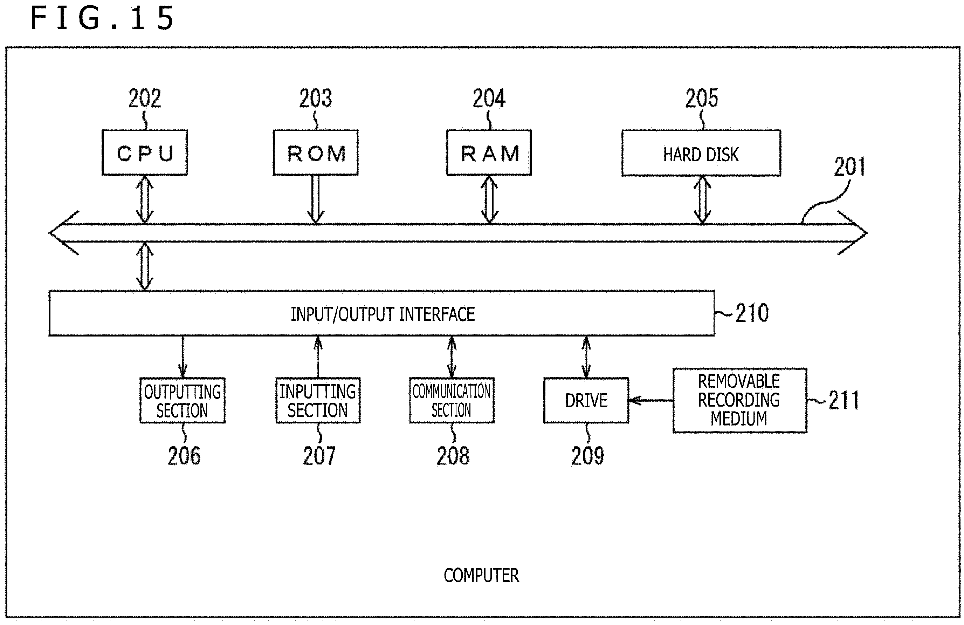

FIG. 15 is a block diagram depicting an example of a configuration of an embodiment of a computer to which the present technology is applied.

[Description of Embodiments]

<First Embodiment of Imaging System to Which Present Technology Is Applied>

FIG. 1 is a block diagram depicting an example of a configuration of a first embodiment of an imaging system to which the present technology is applied.

In FIG. 1, the imaging system includes a multi-viewpoint imaging apparatus 11, an image processing apparatus 12, and a UI (User Interface) apparatus 13.

The multi-viewpoint imaging apparatus 11 images an imaging target from a plurality of viewpoints to obtain multi-viewpoint images and supplies the obtained multi-viewpoint images to (a storage section 23 of) the image processing apparatus 12.

It is to be noted that the multi-viewpoint imaging apparatus 11 has, for example, an AF (Auto Focus) function of the image plane phase difference method and supplies phase difference information hereinafter described obtained by the AF of the image plane phase difference method to (a distance detection section 21 of) the image processing apparatus 12.

The image processing apparatus 12 includes the distance detection section 21, a minimum distance detection section 22, the storage section 23, a reading out section 24, a setting section 25, and an image processing section 26.

The distance detection section 21 detects, upon imaging of an imaging target by the multi-viewpoint imaging apparatus 11, an imaging target distance to an imaging target reflected on a viewpoint image captured by the multi-viewpoint imaging apparatus 11 and supplies the imaging target distance to the minimum distance detection section 22. For example, the distance detection section 21 detects the imaging target distance to the imaging target reflected on the viewpoint image captured by the multi-viewpoint imaging apparatus 11 according to phase difference information supplied from the multi-viewpoint imaging apparatus 11 and supplies the imaging target distance to the minimum distance detection section 22.

The minimum distance detection section 22 detects an imaging target distance that is the minimum (hereinafter referred to as minimum imaging target distance) among various imaging target distances of the imaging target supplied from the distance detection section 21 and supplies the minimum imaging target distance to the storage section 23. It is to be noted that the minimum distance detection section 22 can detect not only a minimum imaging target distance but also a maximum imaging target distance.

The storage section 23 stores multi-viewpoint images supplied from the multi-viewpoint imaging apparatus 11 and a minimum imaging target distance supplied from the minimum distance detection section 22 from among imaging target distances of the imaging target reflected on the viewpoint images in an associated relationship with each other.

As a method of associating multi-viewpoint images with a minimum imaging target distance, for example, a method can be adopted which associates a file of multi-viewpoint images and a file of a minimum imaging target distance with each other by a file name. Further, as the method of associating multi-viewpoint images with a minimum imaging target distance, for example, a method can be adopted which includes the minimum imaging target distance in header information of a file of multi-viewpoint images.

The reading out section 24 reads out multi-viewpoint images stored in the storage section 23 and a minimum imaging target distance associated with the multi-viewpoint images and supplies the minimum imaging target distance to the setting section 25. Further, the reading out section 24 supplies the multi-viewpoint images to the image processing section 26.

The setting section 25 sets control information for controlling an image process of the image processing section 26 according to a minimum imaging target distance (and a maximum imaging target distance) supplied thereto from the reading out section 24 and supplies the control information to control the image process of the image processing section 26.

For example, the setting section 25 sets a maximum value or a minimum value for parallax information obtained by an image process of the image processing section 26 according to the minimum imaging target distance and supplies control information representative of the maximum value or the minimum value of the parallax information to the image processing section 26.

Further, the setting section 25 sets a viewpoint image to be used for an image process of the image processing section 26 according to the minimum imaging target distance and supplies control information representative of the viewpoint image to the image processing section 26.

Furthermore, the setting section 25 sets a resolution of a viewpoint image to be used in an image process of the image processing section 26 according to the minimum imaging target distance and supplies control information representative of the resolution of the viewpoint image to the image processing section 26.

Further, the setting section 25 sets accuracy for parallax information to be obtained in an image process of the image processing section 26 according to the minimum imaging target distance and supplies control information representative of the accuracy of the parallax information to the image processing section 26.

It is to be noted that the setting section 25 can set, according to the minimum imaging target distance, two or more of a maximum value or a minimum value of parallax information obtained by the image process, a viewpoint image to be used for the image process, a resolution of the viewpoint image to be used in the image process, and the accuracy of the parallax information to be obtained by the image process and then supply them as control information to the image processing section 26.

The image processing section 26 performs an image process using (two or more-viewpoint images from among) multi-viewpoint images supplied from the reading out section 24 after imaging of an imaging target by the multi-viewpoint imaging apparatus 11 to obtain (generate), for a viewpoint image (of one or more viewpoints), parallax information relating to a parallax of the imaging target reflected on the viewpoint images.

The image processing section 26 performs an image process for obtaining parallax information in accordance with control information from the setting section 25.

In particular, in the case where the control information from the setting section 25 represents a maximum value or a minimum value of parallax information obtained by an image process, the image processing section 26 performs an image process using the viewpoint images according to the maximum value or the minimum value of the parallax information represented by the control information to obtain parallax information equal to or smaller than the maximum value or equal to or greater than the minimum value.

On the other hand, in the case where the control information from the setting section 25 represents viewpoint images to be used in an image process, the image processing section 26 performs an image process using the viewpoint images represented by the control information to obtain parallax information.

Further, in the case where the control information from the setting section 25 represents a resolution of the viewpoint images to be used for an image process, the image processing section 26 performs an image process using viewpoint images of a resolution represented by the control information to obtain parallax information.

Further, in the case where the control information from the setting section 25 represents accuracy of parallax information to be obtained by an image process, the image processing section 26 obtains parallax information with the accuracy represented by the control information.

Since the image processing section 26 obtains parallax information in accordance with control information set, for example, according to a minimum imaging target distance from among imaging target distances detected by the distance detection section 21, the image processing section 26 can obtain parallax information by performing an image process according to the imaging target distance.

It is to be noted that, after the image processing section 26 obtains parallax information, it can use, as occasion demands, the multi-viewpoint images and the parallax information to perform an image process in which the multi-viewpoint images and the parallax information are used such as refocusing for re-constructing an image for which the focus is to be changed to perform imaging or a like process from the multi-viewpoint images.

Here, as the parallax information, any information that can be converted into a parallax such as a disparity (disparity) that represents a parallax with a pixel number or a distance in a depthwise direction corresponding to the parallax can be adopted. In the present embodiment, as the parallax information, for example, a disparity is adopted, and the image processing section 26 obtains a disparity by an image process and creates a disparity map in which the disparity is registered.

In the case where a disparity is obtained as parallax information by an image process, when the setting section 25 sets a maximum value or a minimum value of parallax information obtained by the image process of the image processing section 26 according to the minimum imaging target distance, the setting section 25 can set, for example, a maximum disparity that is a maximum value or a minimum disparity that is a minimum value of the disparity as parallax information. The maximum disparity is a maximum value of a disparity (disparity of the nearest imaging target) in the case where the image processing section 26 obtains the disparity as parallax information by an image process. The minimum value of the minimum disparity is 0.

On the other hand, in the case where a distance is obtained as parallax information by an image process, when the setting section 25 sets a maximum value or a minimum value of parallax information to be obtained by an image process of the image processing section 26 according to a minimum imaging target distance, the setting section 25 can set, for example, a minimum distance that is a minimum value or a maximum distance that is a maximum value of the distance as the parallax information.

In the following, in order to simplify the description, a case in which a disparity is adopted as parallax information is described, and description of a case in which a distance is adopted is omitted. It is to be noted that, in the case where the distance is adopted as parallax information, the magnitude relationship of values is reversed to that in the case where the disparity is adopted.

The UI apparatus 13 functions as an interface with a user. The UI apparatus includes, for example, an operation section 31 and a display section 32.

The operation section 31 includes various buttons such as a shutter button and levers not depicted, and is operated by a user and supplies an operation signal corresponding to the operation to necessary blocks.

The display section 32 includes a touch panel or the like and displays a (viewpoint) image captured by the multi-viewpoint imaging apparatus 11 as what is generally called a through image. Further, the display section 32 performs various displays of a menu for setting the imaging system and so forth.

It is to be noted that, in the imaging system of FIG. 1, the reading out section 24, the setting section 25, and the image processing section 26 can be provided separately from the imaging system, for example, on a cloud (computer).

<Example of Configuration of Multi-Viewpoint Imaging Apparatus 11>

FIG. 2 is a plan view depicting a first example of a configuration of the multi-viewpoint imaging apparatus 11 of FIG. 1.

In FIG. 2, the multi-viewpoint imaging apparatus 11 includes 25 cameras (camera units) $51_1$ to $51_{25}$ arranged in an equally spaced relationship by horizontal 5 pixels × vertical 5 pixels.

It is to be noted that, in FIG. 2, in order to avoid complicated illustration, some of reference characters of the cameras $51_i$ are omitted.

FIG. 3 is a plan view depicting a second example of a configuration of the multi-viewpoint imaging apparatus 11 of FIG. 1.

In FIG. 3, the multi-viewpoint imaging apparatus 11 includes two cameras $51_1$ and $51_2$ arranged side by side in a horizontal (transverse) direction. The multi-viewpoint imaging apparatus 11 of FIG. 3 is what is generally called a stereo camera.

FIG. 4 is a plan view depicting a third example of a configuration of the multi-viewpoint imaging apparatus 11 of FIG. 1.

In FIG. 4, the multi-viewpoint imaging apparatus 11 includes three cameras $51_1$ to $51_3$ arranged side by side at equal distances in a horizontal direction.

FIG. 5 is a plan view depicting a fourth example of a configuration of the multi-viewpoint imaging apparatus 11 of FIG. 1.

In FIG. 5, the multi-viewpoint imaging apparatus 11 is a stereo camera including two cameras $51_1$ and $51_2$ arranged side by side in a horizontal direction similarly as in FIG. 3.

However, in the multi-viewpoint imaging apparatus 11 of FIG. 5, one or both of the cameras $51_1$ and $51_2$ are configured for movement in the horizontal direction. Accordingly, the base line length that is a distance between an optical axis of the camera $51_1$ and an optical axis of the camera $51_2$ is variable.

It is to be noted that, in FIG. 5, one of the two cameras $51_1$ and $51_2$, for example, the camera $51_2$ can move in the horizontal direction.

<Relationship between Disparity and Imaging Target Distance>

FIG. 6 is a view illustrating a relationship between a disparity and an imaging target distance.

Now, it is assumed that the image processing section 26 obtains a disparity using two-viewpoint images captured, for example, by the two cameras $51_1$ and $51_2$ arranged side by side in the horizontal direction. Further, it is assumed that, in order to simplify the description, the two cameras $51_1$ and $51_2$ are cameras of same specifications.

In this case, if a base line length between the two cameras $51_1$ and $51_2$ is represented by B; a horizontal angle of view of the cameras $51_1$ and $51_2$ by a; a horizontal resolution (pixel number) of viewpoint images captured by the cameras $51_1$ and $51_2$ by H; an imaging target distance by L; and a disparity by D, then the relationship between the disparity D and the imaging target distance L is represented by an expression (1).

$$D = B \times H/(2 \times L \times \tan(a/2)) \quad \cdots \quad (1)$$

The image processing section 26 uses, for example, two-viewpoint images to perform an image process of matching the two-viewpoint images to obtain a disparity for at least one of the viewpoint images from between the two-viewpoint images for each pixel of the viewpoint image.

According to the expression (1), since the disparity D varies depending upon the base line length B (increases in proportion to the base line length B), it is possible to change the base line length B to change (the range of) the disparity D to be obtained by the image process by a method of selection of two-viewpoint images to be used for the image process of the image processing section 26.

In particular, for example, in the multi-viewpoint imaging apparatus 11 of the third example of a configuration of FIG. 4, a base line length B1 between the camera $51_1$ and the camera $51_2$ is equal to 1/2 of a base line length B2 between the camera $51_1$ and the camera $51_3$.

Accordingly, the disparity obtained using a viewpoint image captured by the camera $51_1$ and a viewpoint image captured by the camera $51_2$ is 1/2 the disparity obtained using a viewpoint image captured by the camera $51_1$ and a viewpoint image captured by the camera $51_3$.

According to the multi-viewpoint imaging apparatus 11 depicted in FIGS. 2 and 4, by changing the pair of the cameras $51_i$ and $51_j$ that captures two-viewpoint images to be used in an image process, it is possible to change the base line length B to change (the range of) the disparity D to be obtained by the image process.

Further, according to the multi-viewpoint imaging apparatus 11 depicted in FIG. 5, by moving the camera $51_2$, it is possible to change the base line length B to change the disparity D to be obtained by the image process.

Incidentally, according to the expression (1), as the imaging target distance L decreases (becomes smaller), the disparity D has a higher value and the (detection) resolution of the disparity D becomes higher. On the other hand, as the imaging target distance L increases, the disparity D has a lower value and the resolution of the disparity D has a lower value.

In the image process for obtaining a disparity, a maximum disparity has an influence on a storage capacity of a memory used in the image process and a calculation amount in the image process.

In particular, in the image process for obtaining a disparity, for example, one of two-viewpoint images is used as a base image to be used as a base, and each pixel of the base image is selected as a noticed pixel. Then, matching is performed between a region R1 of a predetermined size centered at the noticed pixel and a region R2 of the predetermined size centered at a position displaced from a position of the noticed pixel by a disparity candidate, which is a candidate for the disparity of the noticed pixel, from the position of the noticed pixel in the other viewpoint image from between the two-viewpoint images. Then, a disparity candidate that indicates the highest evaluation value of matching (for example, a square sum or the like of pixel values of pixels at same positions in the region R1 and the region R2) is determined as the disparity of the noticed pixel.

The evaluation value of matching has a value within a search range for the disparity, for example, defined by a minimum disparity of 0 up to a maximum disparity, and is determined using values within the search range as disparity candidates.

The maximum disparity is a maximum value among the disparity candidates and defines the search range for a disparity, and therefore has an influence on the storage capacity of a memory to be used in the image process and the calculation amount in the image process.

It is to be noted that, although the minimum disparity here is fixed to 0, it is possible to set the minimum disparity to any value lower than the maximum disparity value. In the case where the minimum disparity is set to any value, since the minimum disparity defines the search range for a disparity together with the maximum disparity, it has an influence on the calculation amount in the image process.

Since the maximum disparity has an influence on the storage capacity of a memory to be used in the image process and the calculation amount in the image process in such a manner as described above, preferably it has a lower value. However, if the maximum disparity is small, then the maximum value of the disparity obtained by the image process is restricted. In other words, the minimum value of the imaging target distance obtained by the image process is restricted.

Accordingly, reduction of the storage capacity of a memory to be used in the image process and the calculation amount in the image process and the minimum value of the imaging target distance obtained by the image process (how close the imaging target distance can be obtained) have a tradeoff relationship to each other.

Further, in the case where a base image has reflected therein an imaging target that is closer than the distance corresponding to the maximum disparity (obtained by the image process), the image process cannot accurately obtain the disparity of the imaging target, and an error sometimes occurs.

In the present technology, it is made possible for the image process to appropriately obtain a disparity as parallax information. In particular, the present technology makes it possible to reduce the storage capacity of a memory to be used in the image process, to reduce the calculation amount in the image process, and to suppress appearance of an error in the image process of obtaining a disparity.

In the imaging system of FIG. 1, as it were by feeding back (feeding forward) an imaging target distance detected by the distance detection section 21 upon imaging of an imaging target (viewpoint image) to the image process for obtaining a disparity after imaging of the imaging target, reduction of the storage capacity of a memory to be used in the image process and the calculation amount in the image process and suppression of an error can be achieved.

<Example of Configuration of Pixel Camera 51i Includes>

FIG. 7 is a sectional view depicting an example of a configuration of a pixel the camera 51i has.

Here, the distance detection section 21 detects an imaging target distance to an imaging target reflected on viewpoint images upon imaging of the imaging target by the multi-viewpoint imaging apparatus 11 as described hereinabove with reference to FIG. 1.

As the detection method for detecting an imaging target distance upon imaging of an imaging target by the multi-viewpoint imaging apparatus 11, a detection method is available which uses an active sensor that is a distance sensor that detects a distance by emitting light and receiving reflected light of the light or a passive sensor that is a distance sensor that detects a distance without emitting light.

As the active sensor, for example, a TOF (Time Of Flight) sensor is available, and as the passive sensor, for example, an image sensor compatible with AF (Auto Focus) of the image plane phase difference method (hereinafter referred to also as image plane phase difference sensor) is available.

As the detection method for detecting an imaging target distance upon imaging of an imaging target, any of detection methods that use such an active sensor as described above and detection methods that use such a passive sensor as described above can be adopted. In the present embodiment, as the detection method for detecting an imaging target distance upon imaging an imaging target, for example, a detection method that uses a passive sensor is adopted.

In the detection method that uses a passive sensor, at least one camera 51i that configures the multi-viewpoint imaging apparatus 11 (for example, the camera 51i that captures a viewpoint image to be used as a base image) is configured using an image plane phase difference sensor.

FIG. 7 depicts an example of a configuration of a pixel of the image plane phase difference sensor.

In FIG. 7, the pixel includes a plurality of, for example, two, PDs (Photo Diodes) 61A and 61B, a CF (Color Filter) 62, and a microlens 63.

The two PDs 61A and 61B are arranged side by side in a horizontal direction, and the CF 62 is provided at an upper location of the two PDs 61A and 61B. Further, the microlens 63 is arranged at an upper location of the CF 62.

Accordingly, in the pixel, the single microlens 63 is arranged for the two PDs 61A and 61B.

The PDs 61A and 61B receive rays of light through the microlens 63 such that rays of light from a same imaging target having passed at different positions of a condenser lens not depicted of the camera 51i are received simultaneously. As a result, a signal that includes signals obtained by photoelectric conversion by the PDs 61A in a plurality of pixels in a certain area (such a signal is hereinafter referred to also as A layer signal) and a signal that includes signals obtained by photoelectric conversion by the PD 61B in the plurality of pixels (such a signal is hereinafter referred to as B layer signal) have a phase difference according to a focus displacement with respect to the imaging target reflected in the area.

In AF of the image plane phase difference method, for example, the focus lens is driven such that the phase difference between the A layer signal and the B layer signal is minimized to move the focus lens to a focused position.

An imaging target distance can be obtained from a phase difference between the A layer signal and the B layer signal, and the distance detection section 21 detects an imaging target distance according to phase difference information representative of the phase difference between the A layer signal and the B layer signal that are obtained for every imaging of the imaging target of the multi-viewpoint imaging apparatus 11.

It is to be noted that the image plane phase difference method that uses pixels in which one microlens 63 is arranged for two PDs 61A and 61B is called microlens method. In the microlens method, a sum value of signals of the PDs 61A and 61B configuring a pixel is used as a pixel value of the pixel.

Further, although the microlens method is adopted as the image plane phase difference method here, as the image plane phase difference method, not only the microlens method, but also, for example, a shading method in which a pixel is configured from one PD and an A layer signal and a B layer signal are obtained from a pixel in which a left half of the PD is shaded and another pixel in which a right half of the PD is shaded or some other freely-selected method can be adopted.

<Imaging Process>

FIG. 8 is a flow chart illustrating an example of an imaging process performed by the imaging system of FIG. 1.

In the imaging process, in step S11, the multi-viewpoint imaging apparatus 11 starts imaging of an imaging target from a plurality of viewpoints (multi-viewpoint images) and supplies the multi-viewpoint images obtained by the imaging to the storage section 23. Thereafter, the processing advances to step S12.

In step S12, the multi-viewpoint imaging apparatus 11 sets a plurality of detection areas for detecting an imaging target distance to a light reception face of an image plane phase difference sensor as an image sensor not depicted provided in the camera 51i. Then, the processing advances to step S13.

Here, after the multi-viewpoint imaging apparatus 11 sets a plurality of detection areas for detecting an imaging target distance to the light reception face of the image plane phase difference sensor, it outputs phase difference information obtained from the plurality of detection areas. The phase difference information of each of the plurality of detection areas outputted from the multi-viewpoint imaging apparatus 11 is supplied to the distance detection section 21.

In step S13, the distance detection section 21 detects, for each of the plurality of detection areas, an imaging target distance of the imaging target reflected in the detection area from the phase difference information from the multi-viewpoint imaging apparatus 11, and supplies the imaging target distances to the minimum distance detection section 22. Then, the processing advances to step S14.

In step S14, the minimum distance detection section 22 detects a minimum imaging target distance from among the imaging target distances detected from the plurality of detection areas and supplied from the distance detection section 21. Then, the minimum distance detection section 22 supplies the minimum imaging target distance to the storage section 23, and the processing advances to step S15.

In step S15, the storage section 23 waits that the shutter button of the operation section 31 is depressed fully and then stores an image file of the multi-viewpoint images supplied from the multi-viewpoint imaging apparatus 11 and the minimum imaging target distance supplied from the minimum distance detection section 22 in an associated relationship with each other.

It is to be noted that, in the imaging process of FIG. 8, the processes in steps S13 and S14 are performed repeatedly as occasion demands until the shutter button of the operation section 31 is fully depressed. For example, the processes in steps S13 and S14 can be performed repeatedly until the shutter button of the operation section 31 is fully depressed after imaging of the multi-viewpoint imaging apparatus 11 is started or can be performed repeatedly while the shutter button of the operation section 31 remains half-depressed.

Further, in the image plane phase difference method, the detection accuracy of an imaging target distance decreases as the distance of the imaging target from the focused plane (plane in the actual space in which a focused state is established) increases. Therefore, the distance detection section 21 can control the multi-viewpoint imaging apparatus 11 to move the focused plane to a plurality of positions, at which the imaging target distance from the focused plane can be detected. In this case, the distance detection section 21 can detect a minimum imaging target distance from among the imaging target distances detected for the focused plane in regard to the positions and the plurality of detection areas.

<Example of Disparity Map Creation Process>

FIG. 9 is a flow chart illustrating an example of a disparity map creation process as an image process performed by the imaging system of FIG. 1.

In step S21, the reading out section 24 determines an image file of a processing target from among image files stored in the storage section 23. Then, the processing advances to step S22.

For example, the reading out section 24 determines the oldest image file for which a disparity map is not created as yet from among the image files stored in the storage section 23, an image file designated by operation of the operation section 31 by the user or some other image file as the processing target file.

In step S22, the reading out section 24 reads out the image file of the processing target and a minimum imaging target distance associated with (the multi-viewpoint images of) the image file from the storage section 23. Furthermore, the reading out section 24 supplies the multi-viewpoint images of the image file of the processing target to the image processing section 26. Further, the reading out section 24 supplies the minimum imaging target distance associated with the image file of the processing target to the setting section 25. Then, the processing advances to step S23.

In step S23, the setting section 25 sets a maximum disparity determined by the image process of the image processing section 26 according to the minimum imaging target distance from the reading out section 24 and supplies control information representative of the maximum disparity to the image processing section 26. Then, the processing advances to step S24.

For example, the setting section 25 sets (a value equal to or higher than) a disparity corresponding to the minimum imaging target distance to the maximum disparity.

In step S24, the image processing section 26 selects two-viewpoint images to be used in the image process from among the multi-viewpoint images from the reading out section 24 and one viewpoint image from between the two-viewpoint images as a base image. Then, the processing advances to step S25.

In step S25, the image processing section 26 selects one pixel that has not yet been selected as a noticed pixel from among the pixels of the base image as a noticed pixel. Then, the processing advances to step S26.

In step S26, the image processing section 26 sets a disparity candidate, for example, to 0 that is a default minimum disparity. Then, the processing advances to step S27.

In step S27, the image processing section 26 obtains an evaluation value representative of a likelihood in that the disparity candidate is the disparity of the noticed pixel. Then, the processing advances to step S28.

For example, the image processing section 26 obtains a square sum or the like of pixel values of pixels in a region R1 of a predetermined size and corresponding pixels (positions) in another region R2 of the predetermined size as an evaluation value of the disparity candidate. Here, the region R1 is centered at the noticed pixel of the base image, and the region R2 is centered at a position, displaced from a position of the noticed pixel by the disparity candidate, of the other viewpoint image from between the two-viewpoint images to be used in the image process.

In step S28, the image processing section 26 decides whether the disparity candidate is equal to the maximum disparity represented by the control information from the setting section 25.

In the case where it is decided in step S28 that the disparity candidate is not equal to the maximum disparity, the processing advances to step S29, at which the image processing section 26 increments the disparity candidate by a predetermined step width. Then, the processing returns from step S29 to 27 and, thereafter, similar processes are repeated.

On the other hand, in the case where it is decided in step S28 that the disparity candidate is equal to the maximum disparity, that is, in the case where, determining a range of the disparity from 0 that is the default minimum disparity to the maximum disparity set according to the minimum imaging target distance as a disparity search range, evaluation values of disparity candidates of different values in the search range are obtained, the processing advances to step S30.

In step S30, the image processing section 26 determines the disparity candidate having the most favorable evaluation value as the disparity of the noticed pixel. Then, the processing advances to step S31.

In step S31, the image processing section 26 decides whether all of the pixels of the base image have been selected as a noticed pixel, and in the case where it is decided that all pixels of the base image have not been selected as a noticed pixel as yet, the processing returns to step S25.

On the other hand, in the case where it is decided in step S31 that all of the pixels of the base image have been selected as a noticed pixel, the image processing section 26 creates an image in which pixel values are given by disparities of the pixels of the base image as a disparity map. The disparity map creation process ends therewith.

In this manner, in the imaging system of FIG. 1, a maximum disparity is set according to a minimum imaging target distance, and a disparity is obtained using a range of a default minimum disparity of 0 to a maximum disparity set according to the minimum imaging target distance as a search range for a disparity. Accordingly, the search range for a disparity is restricted to a range necessary to obtain a disparity regarding a viewpoint image by an imaging target distance of the nearest imaging target reflected in the viewpoint image (minimum imaging target distance). Therefore, in comparison with an alternative case in which such restriction as descried above is not performed, reduction of the storage capacity of a memory to be used in the image process for obtaining a disparity and the calculation amount in the image process can be achieved.

<Setting of Accuracy of Disparity According to Minimum Imaging Target Distance>

FIG. 10 is a view depicting an example of setting of accuracy of a disparity according to a minimum imaging target distance.

For example, in the case where the image processing section 26 represents a disparity by a bit string of a fixed length such as 8 bits, the setting section 25 can set accuracy for a disparity according to a minimum imaging target distance.

In particular, although disparity candidates are obtained by the image processing section 26 while the disparity candidate is successively incremented by a predetermined step width within a search range for a disparity, the accuracy of the disparity depends upon the predetermined step width.

For example, in the case where one pixel is adopted as the predetermined step width, disparities of a one-pixel accuracy (unit) can be obtained, and in the case where a 1/2 pixel is adopted as the predetermined step width, disparities of a 1/2 pixel accuracy can be obtained.

In the case where a disparity is represented, for example, by a bit string of 8 bits, a disparity of 256 levels of 0 to 255 can be represented.

Then, in the case where, for example, one pixel is adopted as the predetermined step width, a disparity of 0 to 255 (0, 1, 2, ⋯) of a one-pixel accuracy can be represented using 256 levels represented by a bit string of 8 bits.

On the other hand, in the case where, for example, a 1/2 pixel is adopted as the predetermined step width, a disparity of 0 to 120 (0, 1/2, 1, 3/2, ⋯) in a 1/2 pixel accuracy can be represented using, for example, 241 levels from among the 256 levels represented by a bit string of 8 bits.

Therefore, the setting section 25 can set an accuracy for a disparity according to a minimum imaging target distance as depicted in FIG. 10.

In particular, for example, in the case where the disparity D corresponding to the minimum imaging target distance is equal to or greater than 0 and equal to or smaller than 30, the setting section 25 sets the maximum disparity to 30 and sets the predetermined step width as the accuracy for the disparity to a 1/8 pixel. In this case, using, for example, 241 levels from among the 256 levels represented by a bit string of 8 bits, a disparity of 0 to 30 (0, 1/8, 2/8, ⋯) can be presented in a 1/8 pixel accuracy.

For example, in the case where the disparity D corresponding to the minimum imaging target distance is greater than 30 and equal to or smaller than 60, the setting section 25 sets the maximum disparity to 60 and sets the predetermined step width as the accuracy for a disparity to a 1/4 pixel. In this case, using, for example, 241 levels from among the 256 levels represented by a bit string of 8 bits, a disparity of 0 to 60 (0, 1/4, 2/4, ⋯) can be presented in a 1/4 pixel accuracy.

For example, in the case where the disparity D corresponding to the minimum imaging target distance is greater than 60 and equal to or smaller than 120, the setting section 25 sets the maximum disparity to 120 and sets the predetermined step width as the accuracy for a disparity to a 1/2 pixel. In this case, using, for example, 241 levels from among the 256 levels represented by a bit string of 8 bits, a disparity of 0 to 120 (0, 1/2, 1, ···) can be presented in a 1/2 pixel accuracy.

For example, in the case where the disparity D corresponding to the minimum imaging target distance is greater than 120 and equal to or smaller than 255, the setting section 25 sets the maximum disparity to 255 and sets the predetermined step width as the accuracy for a disparity to one pixel. In this case, using the 256 levels represented by a bit string of 8 bits, a disparity of 0 to 255 (0, 1, 2, ···) can be presented in a one-pixel accuracy.

As described above, the setting section 25 can set a predetermined step width as an accuracy for a disparity according to a minimum imaging target distance and supply control information representative of the predetermined step width to the image processing section 26. Then, the image processing section 26 can obtain a disparity with an accuracy corresponding to the predetermined step width by performing incrementing of a disparity candidate in step S29 (FIG. 9) with the step width represented by the control information from the setting section 25.

<Another Example of Disparity Map Creation Method>

FIG. 11 is a flow chart illustrating another example of the disparity map creation process as the image process performed by the imaging system of FIG. 1.

Here, in the imaging system of FIG. 1, the maximum value of a disparity that can be obtained by the image processing section 26 (hereinafter referred to also as disparity limit value) is sometimes determined already.

In the case where the disparity corresponding to the minimum imaging target distance exceeds the disparity limit value, in the image process for obtaining a disparity, a disparity corresponding to the minimum imaging target distance cannot be obtained accurately, and an error sometimes occurs.

Incidentally, since the relationship between the disparity D and the imaging target distance L is represented by the expression (1), the disparity D increases in proportion to the base line length B and the horizontal resolution H of the viewpoint image and decreases as the base line length B or the horizontal resolution H of the viewpoint image decreases.

Therefore, in the imaging system of FIG. 1, by adjusting the base line length B and the horizontal resolution H of a viewpoint image, the disparity corresponding to the minimum imaging target distance is controlled so as not to exceed the disparity limit value such that an error can be suppressed from occurring in the image process for obtaining a disparity.

In the disparity map creation process of FIG. 11, similar processes to those in steps S21 and S22 of FIG. 9 are performed in steps S41 and S42, respectively.

Then in step S43, the setting section 25 sets two-viewpoint images to be used for an image process of the image processing section 26 according to the minimum imaging target distance and the disparity limit value from the reading out section 24 and supplies control information representative of the two-viewpoint images to the image processing section 26. Then, the processing advances to step S44.

For example, the setting section 25 sets viewpoint images captured by the two cameras $51_i$ and $51_j$ of the base line length B whose disparities corresponding to the minimum imaging target distance are smaller than the disparity limit value to the two-viewpoint images to be used for an image process of the image processing section 26. Where the two-viewpoint images to be used in the image process of the image processing section 26 are set in such a manner as described above, the base line length B is adjusted (changed) such that the disparity corresponding to the minimum imaging target distance becomes equal to or smaller than the disparity limit value.

In step S44, the image processing section 26 selects, from among the multi-viewpoint images from the reading out section 24, two-viewpoint images represented by control information from the setting section 25 as two-viewpoint images to be used for the image process. Then, the image processing section 26 selects one viewpoint image from the two-viewpoint images as a base image.

Alternatively, in step S43, the setting section 25 sets a horizontal resolution H of the two-viewpoint images to be used in the image process of the image processing section 26 according to the minimum imaging target distance and the disparity limit value from the reading out section 24. Then, the setting section 25 supplies control information representative of the horizontal resolution H to the image processing section 26, and then, the processing advances to step S44.

Then, the setting section 25 sets a horizontal resolution H with which the disparity corresponding to the minimum imaging target distance becomes equal to or lower than the disparity limit value.

In step S44, the image processing section 26 selects, from the multi-viewpoint images from the reading out section 24, two-viewpoint images to be used in the image process and adjusts (thins out) the horizontal resolution of the two-viewpoint images so as to be (equal to or lower than) the horizontal resolution H represented by the control information from the setting section 25. Then, the image processing section 26 selects one viewpoint image from between the two-viewpoint images after the adjustment of the horizontal resolution as a base image.

Thereafter, the processing advances from step S44 to step S45 such that processes similar to those in steps S25 to S31 of FIG. 9 are thereafter performed in steps S45 to S51, respectively.

Here, in FIG. 11, a smaller one of a disparity corresponding to the minimum imaging target distance (disparity after the adjustment of the base line length B or the horizontal resolution H) and the disparity limit value is set as a maximum disparity.

It is to be noted that the minimum distance detection section 22 can not only detect a minimum imaging target distance but also an imaging target distance that is the maximum (hereinafter referred to as maximum imaging target distance) from among various imaging target distances of the imaging target supplied thereto from the distance detection section 21.

In the case where a maximum imaging target distance is to be detected, the setting section 25 sets a minimum disparity that is a minimum value of the disparity as parallax information determined by the image process of the image processing section 26 according to the maximum imaging target distance. Then, the setting section 25 can supply control information representative of the minimum disparity to the image processing section 26.

Further, the setting section 25 can supply control information representative of the minimum disparity and the maximum disparity to the image processing section 26.

In the case where the control information representative of the minimum disparity is supplied from the setting section 25 to the image processing section 26, the image processing section 26 can obtain a disparity in regard to the viewpoint image using disparities equal to or higher than the minimum disparity as a search range.

Further, in the case where the control information representative of the minimum disparity and the maximum disparity is supplied from the setting section 25 to the image processing section 26, the image processing section 26 can obtain a disparity in regard to the viewpoint image using disparities equal to or higher than the minimum disparity and equal to or lower than the minimum disparity as a search range.

Accordingly, even in the case where control information representative of the minimum disparity is supplied from the setting section 25 to the image processing section 26, and even in the case where control information representative of the minimum disparity and the maximum disparity is supplied from the setting section 25 to the image processing section 26, the search range when a disparity is to be obtained is restricted. As a result, increase in speed of an image process for obtaining a disparity and the storage capacity of a memory used in an image process for obtaining a disparity can be achieved.

<Second Embodiment of Imaging System to Which Present Technology Is Applied>

FIG. 12 is a block diagram depicting an example of a configuration of a second embodiment of an imaging system to which the present technology is applied.

It is to be noted that, in FIG. 12, elements corresponding to those in the case of FIG. 1 are denoted by the same reference characters, and in the following, description of them is omitted suitably.

The imaging system of FIG. 12 includes a multi-viewpoint imaging apparatus 11, a UI apparatus 13, and an image processing apparatus 50.

Accordingly, the imaging system of FIG. 12 is common to that of the case of FIG. 1 in that it includes the multi-viewpoint imaging apparatus 11 and the UI apparatus 13.

However, the imaging system of FIG. 12 is different from that of the case of FIG. 1 in that it includes the image processing apparatus 50 in place of the image processing apparatus 12.

The image processing apparatus 50 includes a distance detection section 21, a minimum distance detection section 22, a storage section 23, an image processing section 26, a setting section 71, and a change requesting section 72.

Accordingly, the image processing apparatus 50 is common to the image processing apparatus 12 of FIG. 1 in that it includes the distance detection section 21 to the storage section 23 and the image processing section 26.

However, the image processing apparatus 50 is different from that of the case of FIG. 1 in that it does not include the reading out section 24 and the setting section 25 but newly includes the setting section 71 and the change requesting section 72.

The setting section 71 sets a disparity threshold value as a parallax threshold value that is a threshold value for parallax information according to parallax information obtained by the image process of the image processing section 26, that is, for example, according to a disparity limit value that can be obtained by the image processing section 26. Then, the setting section 71 supplies the disparity threshold value to the change requesting section 72.

For example, the setting section 71 sets a disparity limit value or a value equal to or lower than the disparity limit value to a disparity threshold value.

Here, in the imaging system of FIG. 12, the disparity threshold value is a maximum disparity that is obtained by the image process of the image processing section 26.

As described hereinabove, since the maximum disparity obtained by the image process of the image processing section 26 defines the search range for a disparity, it has an influence on the storage capacity of a memory to be used for the image process of the image processing section 26 or on the calculation amount in the image process. Accordingly, from the point of view of the storage capacity of a memory or the calculation amount, preferably the maximum disparity is made as small as possible. On the other hand, if the maximum disparity decreases, then the search range for a disparity becomes narrower as much. Accordingly, the setting section 71 can set the disparity threshold value given by the maximum disparity taking the storage capacity of a memory and the calculation amount as well as the search range for a disparity (range of a disparity that can be obtained by the image process) into consideration.

In the imaging system of FIG. 12, the image processing section 26 sets a range defined, for example, by the minimum disparity of 0 and the maximum disparity given as the disparity threshold as the search range for a disparity to perform image process for obtaining a disparity.

It is to be noted that the setting section 71 can set a disparity threshold value not only according to a disparity threshold value but also, for example, according to an operation of the operation section 31 by the user or the like.

To the change requesting section 72, not only a disparity threshold value is supplied from the setting section 71 but also a minimum imaging target distance is supplied from the minimum distance detection section 22.

The change requesting section 72 controls the storage section 23 to store multi-viewpoint images captured by the multi-viewpoint imaging apparatus 11 into the storage section 23.

Further, the change requesting section 72 performs a change requesting process for requesting change of an imaging state according to a disparity threshold value from the setting section 71 and a minimum imaging target distance from the minimum distance detection section 22.

In particular, as described hereinabove, the image processing section 26 performs an image process for obtaining a disparity using a range of a minimum disparity to a maximum disparity defined by setting the minimum disparity to 0 and setting the maximum disparity as a disparity threshold value as a search range for a disparity. Therefore, in the case where the disparity corresponding to the minimum imaging target distance is greater than the disparity threshold value, an accurate disparity cannot be obtained and an error sometimes occurs.

Therefore, in the case where the disparity corresponding to the minimum imaging target distance is greater than the disparity threshold value, the change requesting section 72 performs a change requesting process to cause the imaging state to be changed such that the disparity corresponding to the minimum imaging target distance becomes equal to or smaller than the disparity threshold value. That is, the change requesting section 72 prompts the user (of the imaging system) to change the imaging state and perform imaging.

For example, the change requesting section 72 restricts, in the change requesting process, (an operation for) full depression of the shutter button of the operation section 31 operated by the user to notify the user that the imaging state at present will cause an error in the image process and to request a change of the imaging state.

Further, for example, the change requesting section 72 causes, in the change requesting process, the display section 32 to perform predetermined display, for example, to turn on an LED for alarming thereby to inform the user that the imaging state at present will cause an error in the image process and to request a change of the imaging state.

In the case where the disparity corresponding to the minimum imaging target distance is greater than the disparity threshold value, the change requesting section 72 performs such a change requesting process as described above to prompt the user to change the imaging state.

Then, if the user who owns the imaging system moves away from the imaging target or moves the imaging target away from the user to change the imaging state until the disparity corresponding to the minimum imaging target distance becomes equal to or smaller than the disparity threshold value, then the change requesting section 72 ends the change requesting process. Further, the change requesting section 72 causes the storage section 23 to store the multi-viewpoint images captured by the multi-viewpoint imaging apparatus 11 according to full depression of the shutter button of the operation section 31.

For the change of the imaging state, the user not only can move away from the imaging target or move the imaging target away from the user but also can perform change of the base line length B of two-viewpoint images to be used in the image process for obtaining a disparity. By changing the base line length B of the two-viewpoint images to be used in the image process for obtaining a disparity, the disparity corresponding to the minimum imaging target distance can be made equal to or smaller than the disparity threshold value from the expression (1).

For example, in the case where the multi-viewpoint imaging apparatus 11 includes three or more cameras 51i as depicted in FIG. 2 and so forth, the change of the base line length B of two-viewpoint images to be used in the image process for obtaining a disparity can be performed by selecting two cameras 51i according to a user operation from among the three or more cameras 51i the multi-viewpoint imaging apparatus 11 includes.

Further, in the case where a camera 51i the multi-viewpoint imaging apparatus 11 includes is movable as depicted in FIG. 5, the change of the base line length B of two-viewpoint images to be used in the image process for obtaining a disparity can be performed by moving the camera 51i of the multi-viewpoint imaging apparatus 11 by the user.

The change requesting section 72 performs a change requesting process according to the minimum imaging target distance from among imaging target distances of an imaging target reflected in multi-viewpoint images captured by the multi-viewpoint imaging apparatus 11 as described hereinabove. Therefore, it can be considered that the change requesting section 72 performs the change process according to an imaging target distance.

It is to be noted that the imaging system of FIG. 12 can be configured without including the image processing section 26. Further, the image processing section 26 can be provided on a cloud without being provided in the imaging process.

Further, in the case described above, the change requesting process is performed when the disparity corresponding to the minimum imaging target distance is greater than the disparity threshold value. However, the change requesting process can be performed not only when the disparity corresponding to the minimum imaging target distance is greater than the disparity threshold value but also when the disparity corresponding to the maximum imaging target distance is smaller than another disparity threshold value (value lower than the disparity threshold value) determined in advance.

In this case, the image processing section 26 performs an image process for obtaining a disparity using a disparity search range given as a range of a minimum disparity to a maximum disparity where the minimum disparity is given by the other disparity threshold value and the maximum disparity is given by the disparity threshold value. This makes it possible to achieve reduction of the calculation amount in the image process for obtaining a disparity.

<Imaging Process>

FIG. 13 is a flow chart illustrating an example of an imaging process performed by the imaging system of FIG. 12.

In the imaging system of FIG. 12, an imaging target distance detected by the distance detection section 21 upon imaging of an imaging target on the basis of (a disparity limit value that defines) a range of a disparity that can be obtained by an image process of the image processing section 26 performed after imaging of the imaging target (viewpoint image) is, as it were, fed back to imaging of the imaging target. By this, reduction of the storage capacity of a memory to be used in the image process and the calculation amount in the image process and suppression of an error can be achieved.

In the imaging process, in step S81, the setting section 71 sets a disparity threshold value according to the disparity limit value and supplies the disparity threshold value to the change requesting section 72. Then, the processing advances to step S82.

In step S82, the multi-viewpoint imaging apparatus 11 starts imaging of an imaging target from a plurality of viewpoints (capturing of multi-viewpoint images) and supplies multi-viewpoint images obtained by the imaging to the storage section 23. Then, the processing advances to step S83.

In step S83, the multi-viewpoint imaging apparatus 11 sets a plurality of detection areas for detecting an imaging target distance on the light reception face of the image plane phase difference sensor as an image sensor not depicted the camera 51i includes. Then, the processing advances to step S84.

Here, after the multi-viewpoint imaging apparatus 11 sets a plurality of detection areas for detecting an imaging target distance to the light reception face of the image plane phase difference sensor, it outputs phase difference information obtained individually from the plurality of detection areas. The phase difference information of the plurality of detection areas outputted from the multi-viewpoint imaging apparatus 11 is supplied to the distance detection section 21.

In step S84, the distance detection section 21 detects, in regard to each of the plurality of detection areas, an imaging target distance of the imaging target reflected in the detection area from the phase difference information from the multi-viewpoint imaging apparatus 11 and supplies the imaging target distance to the minimum distance detection section 22. Then, the processing advances to step S85.

In step S85, the minimum distance detection section 22 detects a minimum imaging target distance from among the imaging target distances detected in regard to the plurality of detection areas supplied from the distance detection section 21 and supplies the minimum imaging target distance to the change requesting section 72. Then, the processing advances to step S86.

In step S86, the change requesting section 72 decides whether the disparity corresponding to the minimum imaging target distance from the minimum distance detection section 22 is equal to or smaller than the disparity threshold value from the setting section 71.

In the case where it is decided in step S86 that the disparity corresponding to the minimum imaging target distance is equal to or smaller than the disparity threshold value, the processing advances to step S87, at which the change requesting section 72 performs a change requesting process to prompt the user to change the imaging state. Then, the processing returns from step S87 to step S84 and similar processes are repeated thereafter.

By the change requesting process, full depression of the shutter button of the operation section 31 is restricted or the LED for warning is turned on.

On the other hand, in the case where it is decided in step S86 that the disparity corresponding to the minimum imaging target distance is equal to or smaller than the disparity threshold value, the change requesting section 72 ends, in the case where it is performing a change requesting process, the change requesting process. Then, the processing advances to step S88.

When the change requesting process is ended, the restriction of full depression of the shutter button of the operation section 31 is cancelled or the LED for warning is turned off.

In step S88, the change requesting section 72 waits that the shutter button of the operation section 31 is fully depressed and then stores (the image file of) the multi-viewpoint images supplied from the multi-viewpoint imaging apparatus 11 to the storage section 23 into the storage section 23.

The multi-viewpoint images stored in the storage section 23 are suitably used in an image process for obtaining a disparity by the image processing section 26.

Here, in the imaging process of FIG. 13, the processes in steps S84 to S87 are performed repeatedly as occasion demands until the shutter button of the operation section 31 is fully depressed. For example, the processes in steps S84 to S87 can be performed repeatedly after imaging by the multi-viewpoint imaging apparatus 11 is started until the shutter button of the operation section 31 is fully depressed or can be performed repeatedly while the shutter button of the operation section 31 remains half-depressed.

It is to be noted that the imaging system of FIG. 1 can include the functions of the imaging system of FIG. 12. In the case where the functions of the imaging system of FIG. 12 are included in the imaging system of FIG. 1, since the disparity threshold value becomes the maximum disparity, the maximum disparity is known. Therefore, the setting section 25 sets, according to a maximum imaging target distance from among imaging target distances, a disparity corresponding to the maximum imaging target distance to a minimum disparity. Thus, the image processing section 26 can obtain a disparity using a range of the minimum disparity to the known maximum disparity as a search range for a disparity.

<Example of Use of Imaging System>

FIG. 14 is a perspective view depicting an example of a configuration of a camera system that uses the imaging system of FIG. 1 or FIG. 12.

The camera system includes a camera main body 110 and a multi-eye interchangeable lens 120.

The camera main body 110 allows the multi-eye interchangeable lens 120 to be removably mounted thereon. In particular, the camera main body 110 includes a camera mount 111, and (a lens mount 122 of) the multi-eye interchangeable lens 120 is attached to the camera mount 111, so that the multi-eye interchangeable lens 120 mounts on the camera main body 110. It is to be noted that, also a general interchangeable lens other than the multi-eye interchangeable lens 120 can be removably mounted on the camera main body 110.

The camera main body 110 has an image sensor 151 built therein. The image sensor 151 is, for example, a CMOS (Complementary Metal Oxide Semiconductor) image sensor and receives and performs photoelectric conversion of rays of light condensed by the multi-eye interchangeable lens 120 or some other interchangeable lens mounted on (the camera mount 111 of) the camera main body 110 to capture an image.

The multi-eye interchangeable lens 120 includes a lens barrel 121 and the lens mount 122.

Four single eye lenses $131_1$, $131_2$, $131_3$, and $131_4$ as a plurality of lenses are arranged such that they do not overlap with each other (as viewed) in an optical axis direction on the lens barrel 121. In FIG. 14, the four single eye lenses $131_1$ to $131_4$ are arranged at positions of the vertices of a diamond shape on a two-dimensional plane orthogonal to the optical axis (parallel to the light reception face (imaging plane) of the image sensor 151) on the lens barrel 121.

The single eye lenses $131_1$ to $131_4$ condense rays of light from an imaging target on the image sensor 151 of the camera main body 110 when the multi-eye interchangeable lens 120 is mounted on the camera main body 110.

It is to be noted that, although the camera main body 110 here is what is generally called a single plate camera including a single image sensor 151, what is generally called a three-plate camera including a plurality of image sensors, that is, for example, three image sensors for RGB (Red, Green, Blue) can be adopted as the camera main body 110. In the camera of the three plate type, the single eye lenses $131_1$ to $131_4$ condense rays of light individually on the three image sensors.

The lens mount 122 is attached to the camera mount 111 of the camera main body 110 when the multi-eye interchangeable lens 120 is mounted on the camera main body 110.

It is to be noted that, while, in FIG. 14, the four single eye lenses $131_1$ to $131_4$ are provided on the multi-eye interchangeable lens 120, the number of single eye lenses to be provided in the multi-eye interchangeable lens 120 is not limited to four, and any plural number of single eye lenses such as two, three, five or more can be adopted.

Furthermore, a plurality of single eye lenses to be provided in the multi-eye interchangeable lens 120 can be arranged not only at positions of the vertices of a diamond shape but also at any position on a two-dimensional plane.

Further, as a plurality of single eye lenses to be provided on the multi-eye interchangeable lens 120, not only a plurality of lenses having specifications same as each other in terms of the focal distance, F value and so forth can be adopted but also a plurality of lenses having different specifications from each other can be adopted.

In the multi-eye interchangeable lens 120, each of the four single eye lenses $131_1$ to $131_4$ as a plurality of single eye lenses is arranged such that, when the multi-eye interchangeable lens 120 is mounted on the camera main body 110, an optical axis thereof is orthogonal to the light reception face of the image sensor 151.

In a camera system in which such a multi-eye interchangeable lens 120 as just described is mounted on the camera main body 110, the image sensor 151 captures images corresponding to pictures formed on the light reception face of the image sensor 151 from rays of light condensed individually by the four single eye lenses $131_1$ to $131_4$.

Now, if it is assumed that an image corresponding to a picture formed by rays of light condensed by one single eye lens $131_i$ (i = 1, 2, 3, and 4) is referred to as single eye image, then an image captured by one image sensor 151 includes four single eye images corresponding to the four single eye lenses $131_1$ to $131_4$ (images corresponding to pictures formed by rays of light condensed by the single eye lenses $131_1$ to $131_4$).

A single eye image corresponding to a single eye lens $131_i$ is an image whose viewpoint is the position of the single eye lens $131_i$. Accordingly, the four single eye images individually corresponding to the single eye lenses $131_1$ to $131_4$ are multi-viewpoint images.

The image processing apparatus 12 of FIG. 1 and the image processing apparatus 50 of FIG. 12 can perform processing for four single eye images individually corresponding to such single eye lenses $131_1$ to $131_4$ that are multi-viewpoint images as described above.

<Description of Computer to Which Present Technology Is Applied>

While the series of processes of the image processing apparatus 12 or 50 described above can be executed by hardware, it may otherwise be executed by software. In the case where the series of processes is executed by software, a program that constructs the software is installed into a computer for universal use and so forth.

FIG. 15 is a block diagram depicting an example of a configuration of an embodiment of a computer into which a program for executing the series of processes described above is installed.

The program can be recorded in advance in a hard disk 205 or a ROM 203 as a recording medium built in a computer.

As an alternative, the program can be stored (recorded) in advance in a removable recording medium 211. Such a removable recording medium 211 as just described can be provided as what is generally called package software. Here, as the removable recording medium 211, for example, a flexible disk, a CD-ROM (Compact Disc Read Only Memory), an MO (Magneto Optical) disk, a DVD (Digital versatile Disc), a magnetic disk, a semiconductor memory and so forth are available.

It is to be noted that the program not only can be installed from such a removable recording medium 211 as described above into the computer but also can be downloaded into the computer through a communication network or a broadcasting network and installed into the built-in hard disk 205. In particular, for example, the program can be transferred from a download site by wireless transmission into the computer through an artificial satellite for digital satellite broadcasting or by wired transmission into the computer through a network such as a LAN (Local Area Network) or the Internet.

The computer has a CPU (Central Processing Unit) 202 built therein, and an input/output interface 210 is connected to the CPU 202 through a bus 201.

If an inputting section 207 is operated by a user to input an instruction to the CPU 202 through the input/output interface 210, then the CPU 202 executes the program stored in the ROM (Read Only Memory) 203 in accordance with the instruction. Alternatively, the CPU 202 loads the program stored in the hard disk 205 into a RAM (Random Access Memory) 204 and executes the program.

Consequently, the CPU 202 performs processing in accordance with the flow chart described hereinabove or performs processing performed by the configuration of the block diagram described hereinabove. Then, the CPU 202 outputs a result of the processing, for example, from an outputting section 206 through the input/output interface 210, transmits the result of the processing from a communication section 208 or records the result of the processing on the hard disk 205 as occasion demands.

It is to be noted that the inputting section 207 includes a keyboard, a mouse, a microphone and so forth. Further, the outputting section 206 includes an LCD (Liquid Crystal Display), a speaker and so forth.

Here, the processing performed by the computer in accordance with the program in the present specification need not necessarily be performed in a time series in accordance with the order described as the flow chart. In other words, the processing performed in accordance with the program by the computer includes processes executed in parallel or individually (for example, processes by parallel processing or by an object).

Further, the program may be processed by one computer (processor) or may be executed by distributed processing by a plurality of computers. Further, the program may be transferred to and executed by a remote computer.

Furthermore, in the present specification, the term system signifies an aggregation composed of a plurality of components (devices, modules (parts) and so forth) and it does not matter whether or not all components are accommodated in the same housing. Accordingly, a plurality of apparatus accommodated in separate housings and connected to each other through a network are a system, and also one apparatus within which a plurality of modules is accommodated in a single housing is a system.

It is to be noted that the embodiment of the present technology is not restricted to the embodiments described hereinabove but various alterations can be made without departing from the subject matter of the present technology.

Further, the present technology can take a configuration for cloud computing in which one function is shared and cooperatively processed by a plurality of apparatus through a network.

Further, the steps described hereinabove in connection with the flow charts can be executed by a single apparatus or can be executed by sharing by a plurality of apparatus.

Furthermore, in the case where one step includes a plurality of processes, the plurality of processes included in the one step can be executed by a single apparatus and also can be executed by sharing by a plurality of apparatuses.

Further, the advantageous effects described in the present specification are exemplary to the last and are not restrictive, and other advantageous effects may be applicable.

It is to be noted that the present technology can take such configurations as described below.

<1> An image processing apparatus, including:
an image processing section configured to perform, according to an imaging target distance, detected upon imaging of an imaging target, to the imaging target reflected in each of viewpoint images captured from a plurality of viewpoints, an image process using the viewpoint images to obtain parallax information in regard to the viewpoint images.
<2> The image processing apparatus according to <1>, in which
the image processing section performs the image process using the viewpoint images according to a minimum imaging target distance that is the minimum among the imaging target distances to obtain parallax information in regard to the viewpoint images.
<3> The image processing apparatus according to <2>, further including:

a setting section configured to set a maximum value or a minimum value of the parallax information obtained by the image process according to the minimum imaging target distance, in which
the image processing section performs the image process using the viewpoint images according to the maximum value or the minimum value of the parallax information to obtain parallax information of the maximum value or less or parallax information of the minimum value or more.

<4> The image processing apparatus according to <2>, further including:

a setting section configured to set a viewpoint image to be used for the image process according to the minimum imaging target distance, in which
the image processing section performs the image process using the viewpoint image set according to the minimum imaging target distance to obtain parallax information in regard to the viewpoint images.

<5> The image processing apparatus according to <2>, further including:

a setting section configured to set a resolution of a viewpoint image to be used for the image process according to the minimum imaging target distance, in which
the image processing section performs the image process using a viewpoint image of the resolution set according to the minimum imaging target distance to obtain parallax information in regard to the viewpoint images.

<6> The image processing apparatus according to <2>, further including:

a setting section configured to set accuracy of parallax information to be obtained by the image process according to the minimum imaging target distance, in which
the image processing section obtains parallax information in regard to the viewpoint images with the accuracy set according to the minimum imaging target distance.

<7> The image processing apparatus according to any one of <1> to <6>, further including:
a distance detection section configured to detect the imaging target distance.
<8> The image processing apparatus according to <7>, in which
the distance detection section detects the imaging target distance by an image plane phase difference method.
<9> An image processing method, including:
performing, according to an imaging target distance, detected upon imaging of an imaging target, to the imaging target reflected in each of viewpoint images captured from a plurality of viewpoints, an image process using the viewpoint images to obtain parallax information in regard to the viewpoint images.

<10> A program for causing a computer to function as:

an image processing section configured to perform, according to an imaging target distance, detected upon imaging of an imaging target, to the imaging target reflected in each of viewpoint images captured from a plurality of viewpoints, an image process using the viewpoint images to obtain parallax information in regard to the viewpoint images.

<11> An image processing apparatus, including:

a change requesting section configured to request, according to an imaging target distance, detected upon imaging of an imaging target, to the imaging target reflected in each of viewpoint images captured from a plurality of viewpoints, change of an imaging state of the imaging target.

<12> The image processing apparatus according to <11>, further including:

an image processing section configured to perform an image process using the viewpoint images to obtain parallax information in regard to the viewpoint images, in which
the change requesting section requests change of an imaging state of the imaging target according to the parallax information obtained by the image process and a minimum imaging target distance that is the minimum among the imaging target distances.

<13> The image processing apparatus according to <12>, further including:

a setting section configured to set a parallax threshold value that is a threshold value for the parallax information according to the parallax information obtained in the image process, in which
the change requesting section requests change of the imaging state according to the parallax threshold value and the minimum imaging target distance.

<14> The image processing apparatus according to any one of <11> to <13>, in which
the change requesting section limits operation of an operation section to be operated by a user to request the user to change the imaging state.

<15> The image processing apparatus according to any one of <11> to <13>, in which
the change requesting section performs predetermined display to request a user to change the imaging state.

<16> The image processing apparatus according to any one of <11> to <15>, further including:
a distance detection section configured to detect the imaging target distance.

<17> The image processing apparatus according to <16>, in which
the distance detection section detects the imaging target distance by an image plane phase difference method.

<18> An image processing method, including:

requesting, according to an imaging target distance, detected upon imaging of an imaging target, to the imaging target reflected in each of viewpoint images captured from a plurality of viewpoints, change of an imaging state of the imaging target.

<19> A program for causing a computer to function as:

a change requesting section configured to request, according to an imaging target distance, detected upon imaging of an imaging target, to the imaging target reflected in each of viewpoint images captured from a plurality of viewpoints, change of an imaging state of the imaging target.

[Reference Signs List]

11 Multi-viewpoint imaging apparatus, 12 Image processing apparatus, 13 UI apparatus, 21 Distance detection section, 22 Minimum distance detection section, 23 Storage section, 24 Reading out section, 25 Setting section, 26 Image processing section, 31 Operation section, 32 Display section, 51i Camera (unit), 61A, 61B PD, 62 CF, 63 Microlens, 71 Setting section, 72 Change requesting section, 110 Camera main body, 111 Camera mount, 120 Multi-eye interchangeable lens, 121 Lens barrel, 122 Lens mount, 123 Lens hood, 131$_i$ Single eye lens, 151 Image sensor, 201 Bus, 202 CPU, 203 ROM, 204 RAM, 205 Hard disk, 206 Outputting section, 207 Inputting section, 208 Communication section, 209 Drive, 210 Input/output interface, 211 Removable recording medium

**Claims**

1. An image processing apparatus, comprising:

an image processing section configured to perform, according to an imaging target distance, detected upon imaging of an imaging target, to the imaging target reflected in each of viewpoint images captured from a plurality of viewpoints, an image process using the viewpoint images to obtain parallax information in regard to the viewpoint images.

2. The image processing apparatus according to claim 1, wherein
the image processing section performs the image process using the viewpoint images according to a minimum imaging target distance that is the minimum among the imaging target distances to obtain parallax information in regard to the viewpoint images.

3. The image processing apparatus according to claim 2, further comprising:

   a setting section configured to set a maximum value or a minimum value of the parallax information obtained by the image process according to the minimum imaging target distance, wherein
   the image processing section performs the image process using the viewpoint images according to the maximum value or the minimum value of the parallax information to obtain parallax information of the maximum value or less or parallax information of the minimum value or more.

4. The image processing apparatus according to claim 2, further comprising:

   a setting section configured to set a viewpoint image to be used for the image process according to the minimum imaging target distance, wherein
   the image processing section performs the image process using the viewpoint image set according to the minimum imaging target distance to obtain parallax information in regard to the viewpoint images.

5. The image processing apparatus according to claim 2, further comprising:

   a setting section configured to set a resolution of a viewpoint image to be used for the image process according to the minimum imaging target distance, wherein
   the image processing section performs the image process using a viewpoint image of the resolution set according to the minimum imaging target distance to obtain parallax information in regard to the viewpoint images.

6. The image processing apparatus according to claim 2, further comprising:

   a setting section configured to set accuracy of parallax information to be obtained by the image process according to the minimum imaging target distance, wherein
   the image processing section obtains parallax information in regard to the viewpoint images with the accuracy set according to the minimum imaging target distance.

7. The image processing apparatus according to claim 1, further comprising:
a distance detection section configured to detect the imaging target distance.

8. The image processing apparatus according to claim 7, wherein
the distance detection section detects the imaging target distance by an image plane phase difference method.

9. An image processing method, comprising:
performing, according to an imaging target distance, detected upon imaging of an imaging target, to the imaging target reflected in each of viewpoint images captured from a plurality of viewpoints, an image process using the viewpoint images to obtain parallax information in regard to the viewpoint images.

10. A program for causing a computer to function as:
an image processing section configured to perform, according to an imaging target distance, detected upon imaging of an imaging target, to the imaging target reflected in each of viewpoint images captured from a plurality of viewpoints, an image process using the viewpoint images to obtain parallax information in regard to the viewpoint images.

11. An image processing apparatus, comprising:
a change requesting section configured to request, according to an imaging target distance, detected upon imaging of an imaging target, to the imaging target reflected in each of viewpoint images captured from a plurality of viewpoints, change of an imaging state of the imaging target.

12. The image processing apparatus according to claim 11, further comprising:

an image processing section configured to perform an image process using the viewpoint images to obtain parallax information in regard to the viewpoint images, wherein
the change requesting section requests change of an imaging state of the imaging target according to the parallax information obtained by the image process and a minimum imaging target distance that is the minimum among the imaging target distances.

13. The image processing apparatus according to claim 12, further comprising:

a setting section configured to set a parallax threshold value that is a threshold value for the parallax information according to the parallax information obtained in the image process, wherein
the change requesting section requests change of the imaging state according to the parallax threshold value and the minimum imaging target distance.

14. The image processing apparatus according to claim 11, wherein the change requesting section limits operation of an operation section to be operated by a user to request the user to change the imaging state.

15. The image processing apparatus according to claim 11, wherein
the change requesting section performs predetermined display to request a user to change the imaging state.

16. The image processing apparatus according to claim 11, further comprising:
a distance detection section configured to detect the imaging target distance.

17. The image processing apparatus according to claim 16, wherein
the distance detection section detects the imaging target distance by an image plane phase difference method.

18. An image processing method, comprising:
requesting, according to an imaging target distance, detected upon imaging of an imaging target, to the imaging target reflected in each of viewpoint images captured from a plurality of viewpoints, change of an imaging state of the imaging target.

19. A program for causing a computer to function as:
a change requesting section configured to request, according to an imaging target distance, detected upon imaging of an imaging target, to the imaging target reflected in each of viewpoint images captured from a plurality of viewpoints, change of an imaging state of the imaging target.

# FIG.1

LIGHT FROM IMAGING TARGET

IMAGING SYSTEM

12 — IMAGE PROCESSING APPARATUS

11 MULTI-VIEWPOINT IMAGING APPARATUS

VIEWPOINT IMAGE

23 STORAGE SECTION

24 READING OUT SECTION

VIEWPOINT IMAGE

26 IMAGE PROCESSING SECTION (GENERATION OF PARALLAX INFORMATION OR THE LIKE)

PHASE DIFFERENCE INFORMATION

21 DISTANCE DETECTION SECTION

IMAGING TARGET DISTANCE

22 MINIMUM DISTANCE DETECTION SECTION

MINIMUM IMAGING TARGET DISTANCE

25 SETTING SECTION

CONTROL INFORMATION

31 OPERATION SECTION

32 DISPLAY SECTION

UI APPARATUS

13

EP 3 736 770 A1

# FIG.2

MULTI-VIEWPOINT IMAGING APPARATUS

$51_1$                             $51_5$

$51_6$

$51_{11}$

$51_{16}$

$51_{21}$                             $51_{25}$

FIG.3

11

MULTI-VIEWPOINT
IMAGING APPARATUS

$51_1$    $51_2$

FIG.4

11

MULTI-VIEWPOINT
IMAGING APPARATUS

$51_1$    $51_2$    $51_3$

# F I G . 5

EP 3 736 770 A1

# F I G . 6

B: BASE LINE LENGTH
a: HORIZONTAL ANGLE OF VIEW
H: HORIZONTAL RESOLUTION
L: IMAGING TARGET DISTANCE
D:disparity

$$D = \frac{B \times H}{2 \times L \times \tan(a/2)}$$

IMAGING TARGET

a: HORIZONTAL
ANGLE OF VIEW

L: IMAGING
TARGET DISTANCE

B: BASE LINE LENGTH

$51_1$

$51_2$

EP 3 736 770 A1

# FIG.7

PIXEL

63

CF ~ 62

| PD | PD |

61A    61B

# FIG.8

```
        IMAGING
        PROCESS
```

START OF IMAGING | S11

SET PLURAL DETECTION AREAS FOR DETECTING IMAGING TARGET
DISTANCE FROM LIGHT RECEPTION FACE OF IMAGE SENSOR | S12

DETECT IMAGING TARGET DISTANCE OF IMAGING TARGET REFLECTED
IN EACH DETECTION AREA FROM PHASE DIFFERENCE INFORMATION OF
DETECTION AREA IN REGARD TO EACH OF PLURAL DETECTION AREAS | S13

DETECT MINIMUM IMAGING TARGET DISTANCE FROM AMONG IMAGING
TARGET DISTANCES DETECTED IN REGARD TO PLURAL DETECTION AREAS | S14

STORE IMAGE FILE OF MULTI-VIEWPOINT IMAGES CAPTURED BY
MULTI-EYE IMAGING APPARATUS AND MINIMUM IMAGING TARGET
DISTANCE IN ASSOCIATED RELATIONSHIP WITH EACH OTHER | S15

```
         END
```

# FIG.9

```
( DISPARITY MAP CREATION PROCESS )
```

DETERMINE IMAGE FILE OF PROCESSING TARGET — S21

READ OUT IMAGE FILE OF PROCESSING TARGET AND MINIMUM IMAGING TARGET DISTANCE ASSOCIATED WITH IMAGE FILE — S22

SET MAXIMUM VALUE OF DISPARITY (MAXIMUM DISPARITY) OBTAINED BY IMAGE PROCESS ACCORDING TO MINIMUM IMAGING TARGET DISTANCE — S23

SELECT TWO-VIEWPOINT IMAGES TO BE USED IN IMAGE PROCESS AND SELECT ONE OF VIEWPOINT IMAGES AS BASE IMAGE — S24

SELECT NOTICED PIXEL FROM BASE IMAGE — S25

DISPARITY CANDIDATE = 0 — S26

OBTAIN EVALUATION VALUE REPRESENTATIVE OF LIKELIHOOD THAT DISPARITY CANDIDATE IS DISPARITY OF NOTICED PIXEL — S27

INCREMENT DISPARITY CANDIDATE — S29

DISPARITY CANDIDATE == MAXIMUM DISPARITY? — S28
NO
YES

DETERMINE DISPARITY OF NOTICED PIXEL ACCORDING TO EVALUATION VALUE — S30

HAVE ALL PIXELS OF BASE IMAGE SELECTED AS NOTICED PIXEL? — S31
NO
YES

( END )

# FIG.10

| CONTROL (SETTING) OF ACCURACY OF DISPARITY ACCORDING TO MINIMUM IMAGING TARGET DISTANCE WHERE DISPARITY IS REPRESENTED BY 8 bits (= 256 LEVELS IN MAXIMUM) | | | | |
|---|---|---|---|---|
| DISPARITY D CORRESPONDING TO MINIMUM IMAGING TARGET DISTANCE | 0<=D<=30 | 30<D<=60 | 60<D<=120 | 120<D<=255 |
| MAXIMUM DISPARITY | 30 | 60 | 120 | 255 |
| ACCURACY OF DISPARITY | 1/8 PIXEL ACCURACY | 1/4 PIXEL ACCURACY | 1/2 PIXEL ACCURACY | ONE PIXEL ACCURACY |
| LEVEL NUMBER | 241 LEVELS (=30/(1/8)+1) | 241 LEVELS (=60/(1/4)+1) | 241 LEVELS (=120/(1/2)+1) | 256 LEVELS (=256/1) |

EP 3 736 770 A1

# FIG.11

```
( DISPARITY MAP CREATION PROCESS )
              │
              ▼
┌─────────────────────────────────────────────────────┐ S41
│ DETERMINE IMAGE FILE OF PROCESSING TARGET           │
└─────────────────────────────────────────────────────┘
              │
              ▼
┌─────────────────────────────────────────────────────┐ S42
│ READ OUT IMAGE FILE OF PROCESSING TARGET AND MINIMUM │
│ IMAGING TARGET DISTANCE ASSOCIATED WITH IMAGE FILE   │
└─────────────────────────────────────────────────────┘
              │
              ▼
┌─────────────────────────────────────────────────────────┐ S43
│ SET VIEWPOINT IMAGE (BASE LINE LENGTH) TO BE USED IN     │
│ IMAGE PROCESS/SET RESOLUTION OF VIEWPOINT IMAGE TO BE    │
│ USED IN IMAGE PROCESS ACCORDING TO MINIMUM IMAGING       │
│ TARGET DISTANCE AND DISPARITY LIMIT VALUE               │
└─────────────────────────────────────────────────────────┘
              │
              ▼
┌─────────────────────────────────────────────────────────┐ S44
│ SELECT TWO-VIEWPOINT IMAGES TO BE USED IN IMAGE PROCESS  │
│ AND SELECT ONE OF VIEWPOINT IMAGES AS BASE IMAGE         │
│ ACCORDING TO CONTROL INFORMATION/SELECT TWO-VIEWPOINT    │
│ IMAGES TO BE USED IN IMAGE PROCESS, ADJUST HORIZONTAL    │
│ RESOLUTION OF VIEWPOINT IMAGES ACCORDING TO CONTROL      │
│ INFORMATION, AND SELECT ONE OF VIEWPOINT IMAGES AS       │
│ BASE IMAGE                                              │
└─────────────────────────────────────────────────────────┘
              │◄──────────────────────────────────┐
              ▼                                    │
┌─────────────────────────────────────────┐ S45      │
│ SELECT NOTICED PIXEL FROM BASE IMAGE    │          │
└─────────────────────────────────────────┘          │
              │                                    │
              ▼                                    │
┌─────────────────────────────────────────┐ S46      │
│ DISPARITY CANDIDATE = 0                 │          │
└─────────────────────────────────────────┘          │
              │◄──────────────────┐                  │
              ▼                    │                  │
┌─────────────────────────────────────────┐ S47      │
│ OBTAIN EVALUATION VALUE REPRESENTATIVE  │          │
│ OF LIKELIHOOD THAT DISPARITY CANDIDATE  │          │
│ IS DISPARITY OF NOTICED PIXEL           │          │
└─────────────────────────────────────────┘          │
              │                    │                  │
┌──────────────────┐ S49          │                  │
│ INCREMENT        │              │                  │
│ DISPARITY        │──────────────┘                  │
│ CANDIDATE        │                                  │
└──────────────────┘                                  │
         ▲ NO                                         │
         │                                            │
  < DISPARITY CANDIDATE == MAXIMUM DISPARITY? > S48    │
              │ YES                                   │
              ▼                                       │
┌─────────────────────────────────────────┐ S50       │
│ DETERMINE DISPARITY OF NOTICED          │           │
│ PIXEL ACCORDING TO EVALUATION VALUE     │           │
└─────────────────────────────────────────┘           │
              │                                       │
              ▼                                    NO │
  < HAVE ALL PIXELS OF BASE IMAGE SELECTED AS NOTICED PIXEL? > S51 ─┘
              │ YES
              ▼
          ( END )
```

# F I G . 1 2

EP 3 736 770 A1

# FIG.13

```
        ( IMAGING PROCESS )
                │
```

**SET DISPARITY THRESHOLD VALUE (PARALLAX THRESHOLD VALUE) ACCORDING TO DISPARITY LIMIT VALUE** — S81

**START IMAGING** — S82

**SET PLURAL DETECTION AREAS FOR DETECTING IMAGING TARGET DISTANCE IN REGARD TO LIGHT RECEPTION FACE OF IMAGE SENSOR** — S83

**DETECT, FOR EACH OF PLURAL DETECTION AREAS, IMAGING TARGET DISTANCE OF IMAGING TARGET REFLECTED IN DETECTION AREA FROM PHASE DIFFERENCE INFORMATION OF DETECTION AREA** — S84

**DETECT, IN REGARD TO EACH OF PLURAL DETECTION AREAS, MINIMUM IMAGING TARGET DISTANCE FROM AMONG DETECTED IMAGING TARGET DISTANCES** — S85

DISPARITY THRESHOLD VALUE >= DISPARITY CORRESPONDING TO MINIMUM IMAGING TARGET DISTANCE? — S86

YES

NO

**CHANGE REQUESTING PROCESS FOR REQUESTING CHANGE OF IMAGING STATE (RESTRICTION OF SHUTTER OPERATION, TURNING ON OF LED AND SO FORTH)** — S87

**STORE IMAGE FILE OF MULTI-VIEWPOINT IMAGES CAPTURED BY MULTI-EYE IMAGING APPARATUS AND MINIMUM IMAGING TARGET DISTANCE IN ASSOCIATED RELATIONSHIP WITH EACH OTHER** — S88

```
            ( END )
```

EP 3 736 770 A1

FIG.14

# FIG.15

## INTERNATIONAL SEARCH REPORT

| International application No. |
|---|
| PCT/JP2018/047161 |

**A. CLASSIFICATION OF SUBJECT MATTER**
Int.Cl. G06T7/55(2017.01)i

According to International Patent Classification (IPC) or to both national classification and IPC

**B. FIELDS SEARCHED**

Minimum documentation searched (classification system followed by classification symbols)
Int.Cl. G06T7/55

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2014-053707 A (CANON INC.) 20 March 2014, paragraphs [0001]-[0049], [0050]-[0059], [0084], fig. 2, 5, 6<br>(Family: none) | 1-4, 7-19<br>5, 6 |
| Y | 絞り値（F値）の理解が一眼レフ上達の最短の道。 余すことなく解説してみよう。 , [online], 27 May 2017, URL <https://yamasha.net/f-number>, non-official translation (Understanding the diaphragm value (F value) is the shortest way to improve the SLR. Let's explain without explanation.) | 5 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21.01.2019 | 05.02.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2018/047161

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2017/158982 A1 (RICOH CO., LTD.) 21 September 2017, paragraph [0029], fig. 6 (Family: none) | 6 |
| Y | WO 2017/159082 A1 (RICOH CO., LTD.) 21 September 2017, paragraphs [0051], [0052] (Family: none) | 6 |

Form PCT/ISA/210 (continuation of second sheet) (January 2015)

## REFERENCES CITED IN THE DESCRIPTION

**Patent documents cited in the description**

- JP 2016173322 A